# EUROPEAN PATENT APPLICATION

(11) **EP 4 572 509 A1**
(43) Date of publication of application: **18.06.2025**
(21) Application number: 23853031.5
(22) Date of filing: 10.08.2023
(51) Int. Cl.: H04W 74/08, H04W 72/04, H04W 72/12, H04W 72/25, H04W 92/18

(54) **METHOD AND APPARATUS FOR PERFORMING SIDELINK COMMUNICATION ON BASIS OF COT IN UNLICENSED BAND**

(30) Priority: 11.08.2022 US 202263397335 P
(71) Applicant: LG Electronics Inc., Yeongdeungpo-gu Seoul 07336 (KR)
(72) Inventor: LEE, Seungmin, Seoul 06772 (KR); HWANG, Daesung, Seoul 06772 (KR); LEE, Youngdae, Seoul 06772 (KR); YANG, Suckchel, Seoul 06772 (KR); KIM, Seonwook, Seoul 06772 (KR)
(74) Representative: Plasseraud IP
(86) International application number: PCT/KR2023/011843
(87) International publication number: WO 2024/035164

(57) **Abstract**

Provided are a method by which a first device performs wireless communication and an apparatus supporting same. The method may comprise the steps of: receiving, in a slot, sidelink control information (SCI) including channel occupancy time (COT) sharing information from a second device; and performing second type channel access within a COT duration acquired on the basis of the COT sharing information.

## Description

### TECHNICAL FIELD

This disclosure relates to a wireless communication system.

### BACKGROUND ART

Sidelink (SL) communication is a communication scheme in which a direct link is established between User Equipments (UEs) and the UEs exchange voice and data directly with each other without intervention of a base station. SL communication is under consideration as a solution to the overhead of a base station caused by rapidly increasing data traffic. Vehicle-to-everything (V2X) refers to a communication technology through which a vehicle exchanges information with another vehicle, a pedestrian, an object having an infrastructure (or infra) established therein, and so on. The V2X may be divided into 4 types, such as vehicle-to-vehicle (V2V), vehicle-to-infrastructure (V2I), vehicle-to-network (V2N), and vehicle-to-pedestrian (V2P). The V2X communication may be provided via a PC5 interface and/or Uu interface.

Meanwhile, as a wider range of communication devices require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR).

### DISCLOSURE

### TECHNICAL SOLUTION

In an embodiment, provided is a method for performing wireless communication by a first device. The method may comprise: receiving, in a slot, from a second device, sidelink control information (SCI) including channel occupancy time (COT) sharing information; and performing a second type channel access within a COT duration obtained based on the COT sharing information. For example, a processing time required for decoding the COT sharing information may be defined for the first device. For example, the processing time may start from the slot in which the SCI including the COT sharing information is received.

In an embodiment, provided is a first device adapted to perform wireless communication. The first device may comprise: at least one transceiver; at least one processor; and at least one memory connected to the at least one processor and storing instructions that, based on being executed by the at least one processor, cause the first device to perform operations comprising: receiving, in a slot, from a second device, sidelink control information (SCI) including channel occupancy time (COT) sharing information; and performing a second type channel access within a COT duration obtained based on the COT sharing information. For example, a processing time required for decoding the COT sharing information may be defined for the first device. For example, the processing time may start from the slot in which the SCI including the COT sharing information is received.

In an embodiment, provided is a processing device adapted to control a first device. The processing device may comprise: at least one processor; and at least one memory connected to the at least one processor and storing instructions that, based on being executed by the at least one processor, cause the first device to perform operations comprising: receiving, in a slot, from a second device, sidelink control information (SCI) including channel occupancy time (COT) sharing information; and performing a second type channel access within a COT duration obtained based on the COT sharing information. For example, a processing time required for decoding the COT sharing information may be defined for the first device. For example, the processing time may start from the slot in which the SCI including the COT sharing information is received.

In an embodiment, provided is a non-transitory computer-readable storage medium storing instructions. The instructions, when executed, may cause a first device to perform operations comprising: receiving, in a slot, from a second device, sidelink control information (SCI) including channel occupancy time (COT) sharing information; and performing a second type channel access within a COT duration obtained based on the COT sharing information. For example, a processing time required for decoding the COT sharing information may be defined for the first device. For example, the processing time may start from the slot in which the SCI including the COT sharing information is received.

### BRIEF DESCRIPTION OF THE DRAWINGS

FIG. 1 shows a communication structure providable in a 6G system, based on an embodiment of the present disclosure.
FIG. 2 shows an electromagnetic spectrum, based on an embodiment of the present disclosure.
FIG. 3 shows a structure of an NR system, based on an embodiment of the present disclosure.
FIG. 4 shows a radio protocol architecture, based on an embodiment of the present disclosure.
FIG. 5 shows a structure of a radio frame of an NR, based on an embodiment of the present disclosure.
FIG. 6 shows a structure of a slot of an NR frame, based on an embodiment of the present disclosure.
FIG. 7 shows an example of a BWP, based on an embodiment of the present disclosure.
FIG. 8 shows a procedure of performing V2X or SL communication by a UE based on a transmission mode, based on an embodiment of the present disclosure.
FIG. 9 shows three cast types, based on an embodiment of the present disclosure.
FIG. 10 shows an interlaced RB, based on an embodiment of the present disclosure.
FIG. 11 shows a method for a first device to perform wireless communication, based on an embodiment of the present disclosure.
FIG. 12 shows a method for a second device to perform wireless communication, based on an embodiment of the present disclosure.
FIG. 13 shows a communication system 1, based on an embodiment of the present disclosure.
FIG. 14 shows wireless devices, based on an embodiment of the present disclosure.
FIG. 15 shows a signal process circuit for a transmission signal, based on an embodiment of the present disclosure.
FIG. 16 shows another example of a wireless device, based on an embodiment of the present disclosure.
FIG. 17 shows a hand-held device, based on an embodiment of the present disclosure.
FIG. 18 shows a vehicle or an autonomous vehicle, based on an embodiment of the present disclosure.

### MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or pre-defined for a UE. For example, a base station or a network may transmit the higher layer parameter to the UE. For example, the higher layer parameter may be transmitted through radio resource control (RRC) signaling or medium access control (MAC) signaling.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

A 6G (wireless communication) system has purposes such as (i) very high data rate per device, (ii) a very large number of connected devices, (iii) global connectivity, (iv) very low latency, (v) decrease in energy consumption of battery-free IoT devices, (vi) ultra-reliable connectivity, and (vii) connected intelligence with machine learning capacity. The vision of the 6G system may include four aspects such as intelligent connectivity, deep connectivity, holographic connectivity and ubiquitous connectivity, and the 6G system may satisfy the requirements shown in Table 1 below. That is, Table 1 shows the requirements of the 6G system.

**[Table 1]**

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

The 6G system may have key factors such as enhanced mobile broadband (eMBB), ultra-reliable low latency communications (URLLC), massive machine type communications (mMTC), AI integrated communication, tactile internet, high throughput, high network capacity, high energy efficiency, low backhaul and access network congestion, and enhanced data security.

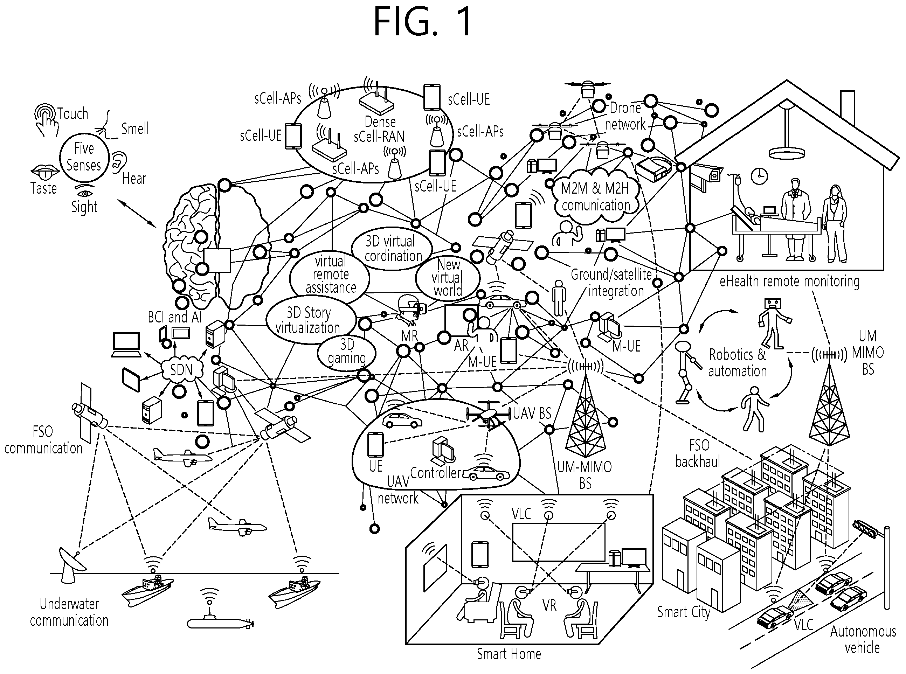

FIG. 1 shows a communication structure providable in a 6G system, based on an embodiment of the present disclosure. The embodiment of FIG. 1 may be combined with various embodiments of the present disclosure.

The 6G system will have 50 times higher simultaneous wireless communication connectivity than a 5G wireless communication system. URLLC, which is the key feature of 5G, will become more important technology by providing end-to-end latency less than 1 ms in 6G communication. The 6G system may have much better volumetric spectrum efficiency unlike frequently used domain spectrum efficiency. The 6G system may provide advanced battery technology for energy harvesting and very long battery life and thus mobile devices may not need to be separately charged in the 6G system. In 6G, new network characteristics may be as follows.
- Satellites integrated network: To provide a global mobile group, 6G will be integrated with satellite. Integrating terrestrial waves, satellites and public networks as one wireless communication system may be very important for 6G.
- Connected intelligence: Unlike the wireless communication systems of previous generations, 6G is innovative and wireless evolution may be updated from "connected things" to "connected intelligence". AI may be applied in each step (or each signal processing procedure which will be described below) of a communication procedure.
- Seamless integration of wireless information and energy transfer: A 6G wireless network may transfer power in order to charge the batteries of devices such as smartphones and sensors. Therefore, wireless information and energy transfer (WIET) will be integrated.
- Ubiquitous super 3-dimension connectivity: Access to networks and core network functions of drones and very low earth orbit satellites will establish super 3D connection in 6G ubiquitous.

In the new network characteristics of 6G, several general requirements may be as follows.
- Small cell networks: The idea of a small cell network was introduced in order to improve received signal quality as a result of throughput, energy efficiency and spectrum efficiency improvement in a cellular system. As a result, the small cell network is an essential feature for 5G and beyond 5G (5 GB) communication systems. Accordingly, the 6G communication system also employs the characteristics of the small cell network.
- Ultra-dense heterogeneous network: Ultra-dense heterogeneous networks will be another important characteristic of the 6G communication system. A multi-tier network composed of heterogeneous networks improves overall QoS and reduces costs.
- High-capacity backhaul: Backhaul connection is characterized by a high-capacity backhaul network in order to support high-capacity traffic. A high-speed optical fiber and free space optical (FSO) system may be a possible solution for this problem.
- Radar technology integrated with mobile technology: High-precision localization (or location-based service) through communication is one of the functions of the 6G wireless communication system. Accordingly, the radar system will be integrated with the 6G network.
- Softwarization and virtualization: Softwarization and virtualization are two important functions which are the bases of a design process in a 5 GB network in order to ensure flexibility, reconfigurability and programmability.

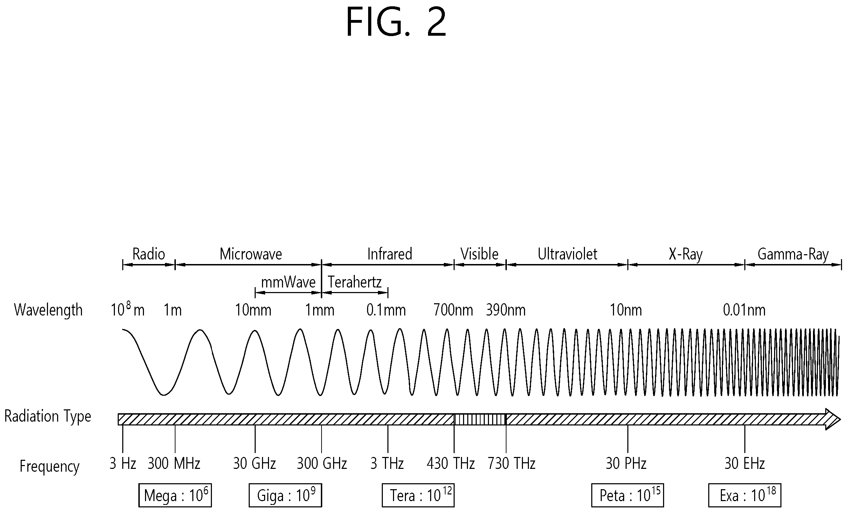

Core implementation technology of 6G system is described below.
- Artificial Intelligence (AI): Technology which is most important in the 6G system and will be newly introduced is AI. AI was not involved in the 4G system. A 5G system will support partial or very limited AI. However, the 6G system will support AI for full automation. Advance in machine learning will create a more intelligent network for real-time communication in 6G. When AI is introduced to communication, real-time data transmission may be simplified and improved. AI may determine a method of performing complicated target tasks using countless analysis. That is, AI may increase efficiency and reduce processing delay. Operation consuming time such as handover, network selection, and resource scheduling immediately performed by using AI. AI may also play an important role in M2M, machine-to-human, and human-to-machine. In addition, AI may be a prompt communication in brain computer interface (BCI). An AI based communication system may be supported by metamaterial, intelligence structure, intelligence network, intelligence device, intelligence cognitive radio, self-maintaining wireless network, and machine learning.
- Terahertz (THz) communication: A data rate may increase by increasing bandwidth. This may be performed by using sub-TH communication with wide bandwidth and applying advanced massive MIMO technology. THz waves which are known as sub-millimeter radiation, generally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communication. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical band but is at the border of the optical band and is just behind an RF band. Accordingly, the band of 300 GHz to 3 THz has similarity with RF. FIG. 2 shows an electromagnetic spectrum, based on an embodiment of the present disclosure. The embodiment of FIG. 2 may be combined with various embodiments of the present disclosure. The main characteristics of THz communication include (i) bandwidth widely available to support a very high data rate and (ii) high path loss occurring at a high frequency (a high directional antenna is indispensable). A narrow beam width generated in the high directional antenna reduces interference. The small wavelength of a THz signal allows a larger number of antenna elements to be integrated with a device and BS operating in this band. Therefore, an advanced adaptive arrangement technology capable of overcoming a range limitation may be used.
- Massive MIMO technology (large-scale MIMO)
- Hologram beamforming (HBF)
- Optical wireless technology
- Free space optical backhaul network (FSO Backhaul Network)
- Non-terrestrial networks (NTN)
- Quantum communication
- Cell-free communication
- Integration of wireless information and power transmission
- Integration of wireless communication and sensing
- Integrated access and backhaul network
- Big data analysis
- Reconfigurable intelligent surface
- Metaverse
- Block-chain
- Unmanned aerial vehicle (UAV): An unmanned aerial vehicle (UAV) or drone will be an important factor in 6G wireless communication. In most cases, a high-speed data wireless connection is provided using UAV technology. A base station entity is installed in the UAV to provide cellular connectivity. UAVs have certain features, which are not found in fixed base station infrastructures, such as easy deployment, strong line-of-sight links, and mobility-controlled degrees of freedom. During emergencies such as natural disasters, the deployment of terrestrial telecommunications infrastructure is not economically feasible and sometimes services cannot be provided in volatile environments. The UAV can easily handle this situation. The UAV will be a new paradigm in the field of wireless communications. This technology facilitates the three basic requirements of wireless networks, such as eMBB, URLLC and mMTC. The UAV can also serve a number of purposes, such as network connectivity improvement, fire detection, disaster emergency services, security and surveillance, pollution monitoring, parking monitoring, and accident monitoring. Therefore, UAV technology is recognized as one of the most important technologies for 6G communication.
- Autonomous driving (self-driving): For perfect autonomous driving, it is necessary to notify dangerous situation of each other through communication between vehicle and vehicle, to check information like parking information location and signal change time through communication between vehicle and infrastructure such as parking lots and/or traffic lights. Vehicle to everything (V2X) that is a core element for establishing an autonomous driving infrastructure is a technology that vehicle communicates and shares with various elements in road for autonomous driving such as vehicle to vehicle (V2V), vehicle to infrastructure (V2I). To maximize a performance of autonomous driving and to secure high safety, high transmission speed and low latency technology have to be needed. Furthermore, to directly control vehicle in dangerous situation and to actively intervene vehicle driving beyond a level of a warning or a guidance message to driver, as the amount of the information to transmit and receive is larger, autonomous driving is expected to be maximized in 6G being higher transmission speed and lower latency than 5G.

For clarity in the description, 5G NR is mainly described, but the technical idea according to an embodiment of the present disclosure is not limited thereto. Various embodiments of the present disclosure can also be applied to 6G communication systems.

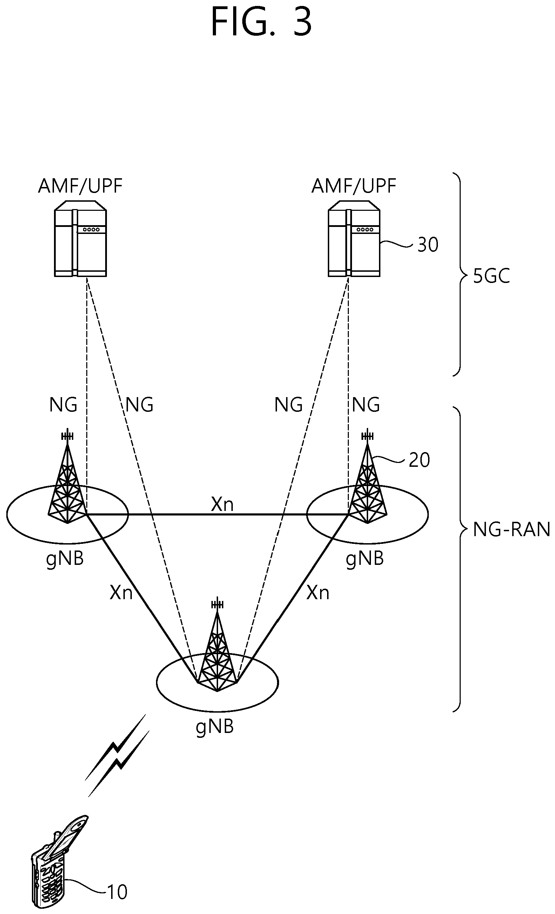

FIG. 3 shows a structure of an NR system, based on an embodiment of the present disclosure. The embodiment of FIG. 3 may be combined with various embodiments of the present disclosure.

Referring to FIG. 3, a next generation-radio access network (NG-RAN) may include a BS 20 providing a UE 10 with a user plane and control plane protocol termination. For example, the BS 20 may include a next generation-Node B (gNB) and/or an evolved-NodeB (eNB). For example, the UE 10 may be fixed or mobile and may be referred to as other terms, such as a mobile station (MS), a user terminal (UT), a subscriber station (SS), a mobile terminal (MT), wireless device, and so on. For example, the BS may be referred to as a fixed station which communicates with the UE 10 and may be referred to as other terms, such as a base transceiver system (BTS), an access point (AP), and so on.

The embodiment of FIG. 3 exemplifies a case where only the gNB is included. The BSs 20 may be connected to one another via Xn interface. The BS 20 may be connected to one another via 5th generation (5G) core network (5GC) and NG interface. More specifically, the BSs 20 may be connected to an access and mobility management function (AMF) 30 via NG-C interface, and may be connected to a user plane function (UPF) 30 via NG-U interface.

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

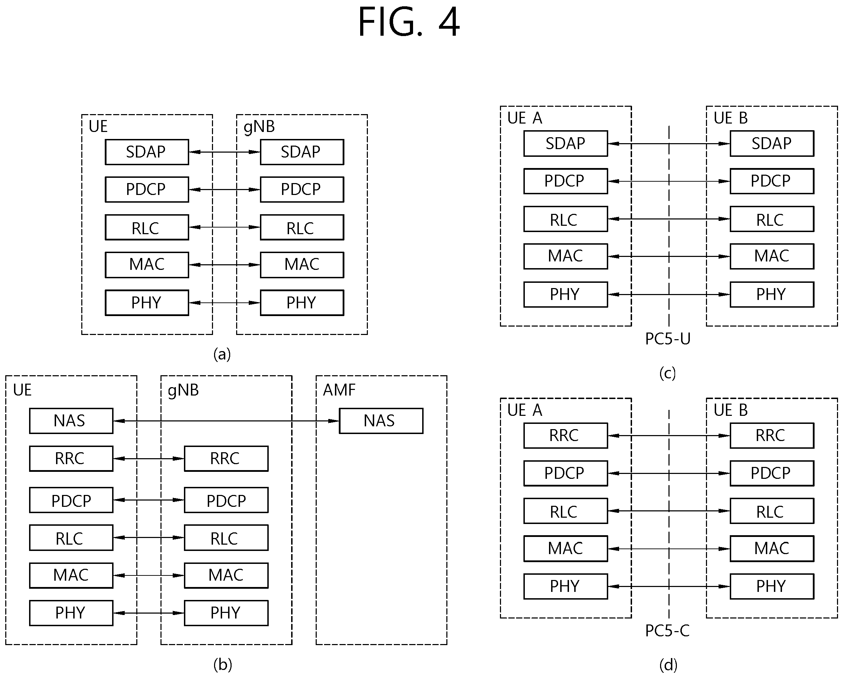

FIG. 4 shows a radio protocol architecture, based on an embodiment of the present disclosure. The embodiment of FIG. 4 may be combined with various embodiments of the present disclosure. Specifically, (a) of FIG. 4 shows a radio protocol stack of a user plane for Uu communication, and (b) of FIG. 4 shows a radio protocol stack of a control plane for Uu communication. (c) of FIG. 4 shows a radio protocol stack of a user plane for SL communication, and (d) of FIG. 4 shows a radio protocol stack of a control plane for SL communication.

Referring to FIG. 4, a physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

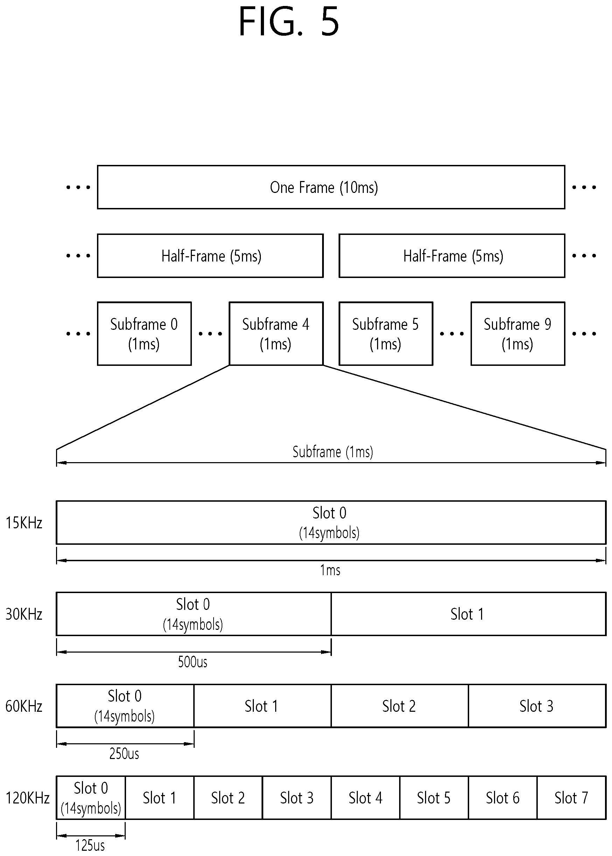

FIG. 5 shows a structure of a radio frame of an NR, based on an embodiment of the present disclosure. The embodiment of FIG. 5 may be combined with various embodiments of the present disclosure.

Referring to FIG. 5, in the NR, a radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT- s-OFDM) symbol).

Table 2 shown below represents an example of a number of symbols per slot (N^{Slot}_{symb}), a number slots per frame (N^{frame,u}ₛₗₒₜ), and a number of slots per subframe (N^{subframe,u}ₛₗₒₜ) based on an SCS configuration (u), in a case where a normal CP or an extended CP is used.

**[Table 2]**

| CP type | SCS (15*2^{u}) | N^{slot}_{symb} | N^{frame,u}ₛₗₒₜ | N^{subframe,u}ₛₗₒₜ |
|---|---|---|---|---|
| normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| extended CP | 60kHz (u=2) | 12 | 40 | 4 |

In an NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

In the NR, multiple numerologies or SCSs for supporting diverse 5G services may be supported. For example, in case an SCS is 15kHz, a wide area of the conventional cellular bands may be supported, and, in case an SCS is 30kHz/60kHz a dense-urban, lower latency, wider carrier bandwidth may be supported. In case the SCS is 60kHz or higher, a bandwidth that is greater than 24.25GHz may be used in order to overcome phase noise.

An NR frequency band may be defined as two different types of frequency ranges. The two different types of frequency ranges may be FR1 and FR2. The values of the frequency ranges may be changed (or varied), and, for example, the two different types of frequency ranges may be as shown below in Table 3. Among the frequency ranges that are used in an NR system, FR1 may mean a "sub 6GHz range", and FR2 may mean an "above 6GHz range" and may also be referred to as a millimeter wave (mmW).

**[Table 3]**

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table 4, FR1 may include a band within a range of 410MHz to 7125MHz. More specifically, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 mat include an unlicensed band. The unlicensed band may be used for diverse purposes, e.g., the unlicensed band for vehicle-specific communication (e.g., automated driving).

**[Table 4]**

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

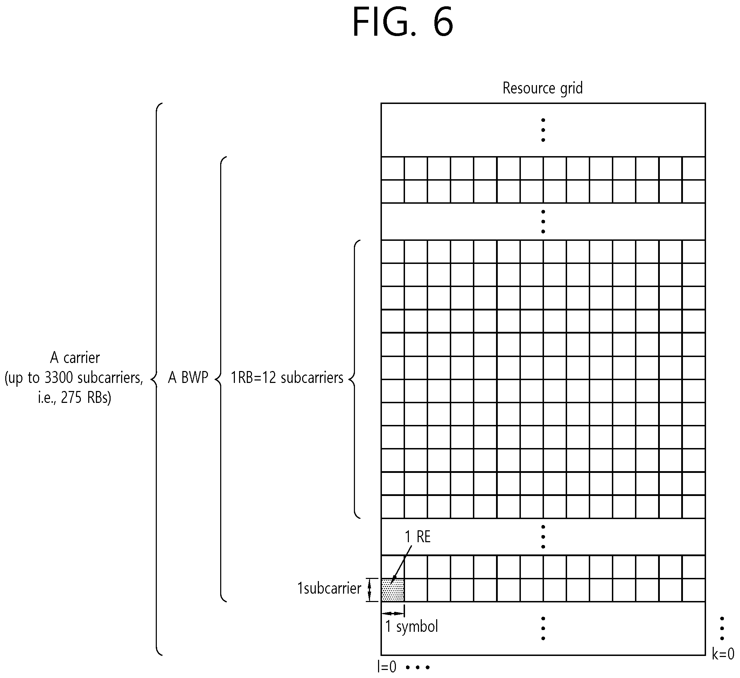

FIG. 6 shows a structure of a slot of an NR frame, based on an embodiment of the present disclosure. The embodiment of FIG. 6 may be combined with various embodiments of the present disclosure.

Referring to FIG. 6, a slot includes a plurality of symbols in a time domain. For example, in case of a normal CP, one slot may include 14 symbols. However, in case of an extended CP, one slot may include 12 symbols. Alternatively, in case of a normal CP, one slot may include 7 symbols. However, in case of an extended CP, one slot may include 6 symbols.

A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

Hereinafter, a bandwidth part (BWP) and a carrier will be described.

The BWP may be a set of consecutive physical resource blocks (PRBs) in a given numerology. The PRB may be selected from consecutive sub-sets of common resource blocks (CRBs) for the given numerology on a given carrier

For example, the BWP may be at least any one of an active BWP, an initial BWP, and/or a default BWP. For example, the UE may not monitor downlink radio link quality in a DL BWP other than an active DL BWP on a primary cell (PCell). For example, the UE may not receive PDCCH, physical downlink shared channel (PDSCH), or channel state information - reference signal (CSI-RS) (excluding RRM) outside the active DL BWP. For example, the UE may not trigger a channel state information (CSI) report for the inactive DL BWP. For example, the UE may not transmit physical uplink control channel (PUCCH) or physical uplink shared channel (PUSCH) outside an active UL BWP. For example, in a downlink case, the initial BWP may be given as a consecutive RB set for a remaining minimum system information (RMSI) control resource set (CORESET) (configured by physical broadcast channel (PBCH)). For example, in an uplink case, the initial BWP may be given by system information block (SIB) for a random access procedure. For example, the default BWP may be configured by a higher layer. For example, an initial value of the default BWP may be an initial DL BWP. For energy saving, if the UE fails to detect downlink control information (DCI) during a specific period, the UE may switch the active BWP of the UE to the default BWP.

Meanwhile, the BWP may be defined for SL. The same SL BWP may be used in transmission and reception. For example, a transmitting UE may transmit a SL channel or a SL signal on a specific BWP, and a receiving UE may receive the SL channel or the SL signal on the specific BWP. In a licensed carrier, the SL BWP may be defined separately from a Uu BWP, and the SL BWP may have configuration signaling separate from the Uu BWP. For example, the UE may receive a configuration for the SL BWP from the BS/network. For example, the UE may receive a configuration for the Uu BWP from the BS/network. The SL BWP may be (pre-)configured in a carrier with respect to an out-of-coverage NR V2X UE and an RRC_IDLE UE. For the UE in the RRC_CONNECTED mode, at least one SL BWP may be activated in the carrier.

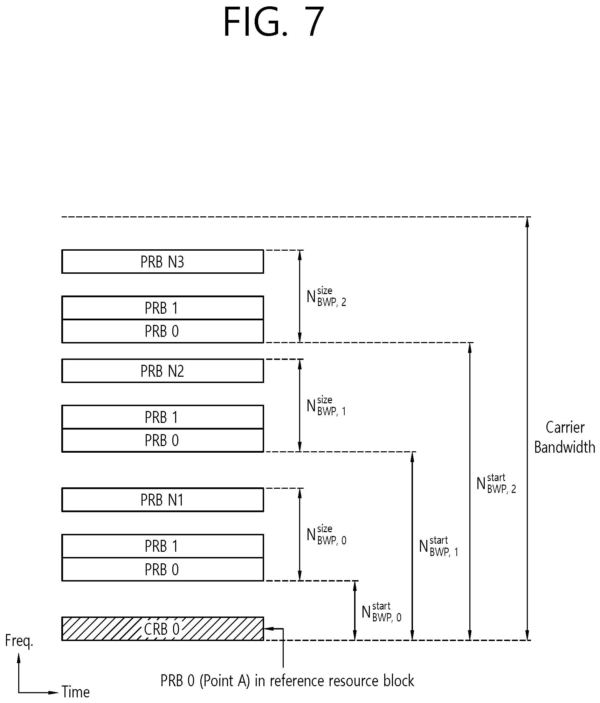

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{size}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

Hereinafter, V2X or SL communication will be described.

A sidelink synchronization signal (SLSS) may include a primary sidelink synchronization signal (PSSS) and a secondary sidelink synchronization signal (SSSS), as a SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

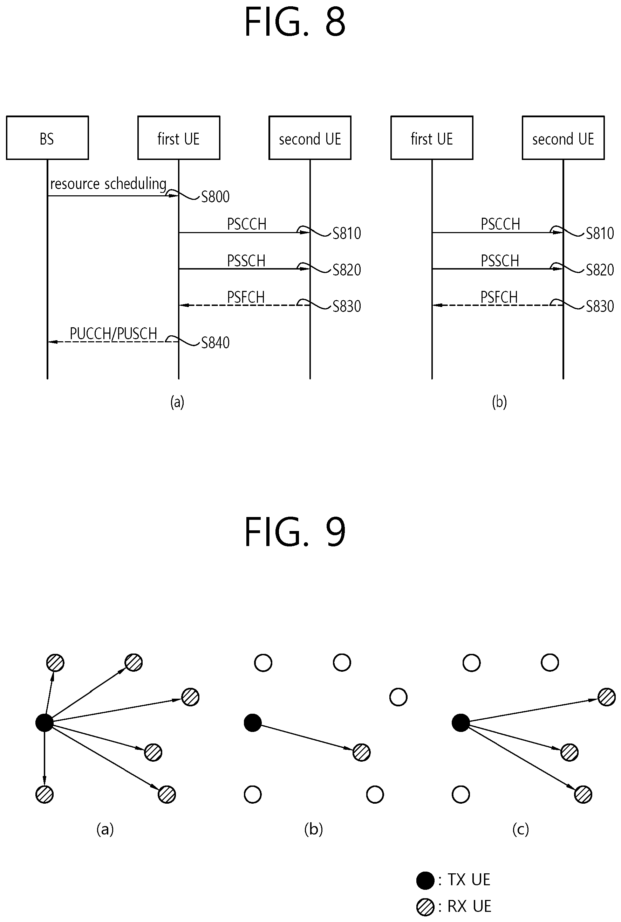

FIG. 8 shows a procedure of performing V2X or SL communication by a UE based on a transmission mode, based on an embodiment of the present disclosure. The embodiment of FIG. 8 may be combined with various embodiments of the present disclosure. In various embodiments of the present disclosure, the transmission mode may be called a mode or a resource allocation mode. Hereinafter, for convenience of explanation, in LTE, the transmission mode may be called an LTE transmission mode. In NR, the transmission mode may be called an NR resource allocation mode.

For example, (a) of FIG. 8 shows a UE operation related to an LTE transmission mode 1 or an LTE transmission mode 3. Alternatively, for example, (a) of FIG. 8 shows a UE operation related to an NR resource allocation mode 1. For example, the LTE transmission mode 1 may be applied to general SL communication, and the LTE transmission mode 3 may be applied to V2X communication.

For example, (b) of FIG. 8 shows a UE operation related to an LTE transmission mode 2 or an LTE transmission mode 4. Alternatively, for example, (b) of FIG. 8 shows a UE operation related to an NR resource allocation mode 2.

Referring to (a) of FIG. 8, in the LTE transmission mode 1, the LTE transmission mode 3, or the NR resource allocation mode 1, a base station may schedule SL resource(s) to be used by a UE for SL transmission. For example, in step S800, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S810, the first UE may transmit a PSCCH (e.g., sidelink control information (SCI) or 1^{st}-stage SCI) to a second UE based on the resource scheduling. In step S820, the first UE may transmit a PSSCH (e.g., 2^{nd}-stage SCI, MAC PDU, data, etc.) related to the PSCCH to the second UE. In step S830, the first UE may receive a PSFCH related to the PSCCH/PSSCH from the second UE. For example, HARQ feedback information (e.g., NACK information or ACK information) may be received from the second UE through the PSFCH. In step S840, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling. For example, a format of the DCI may be a DCI format 3_0 or a DCI format 3_1.

Referring to (b) of FIG. 8, in the LTE transmission mode 2, the LTE transmission mode 4, or the NR resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S810, a first UE which has selected resource(s) from a resource pool by itself may transmit a PSCCH (e.g., sidelink control information (SCI) or 1^{st}-stage SCI) to a second UE by using the resource(s). In step S820, the first UE may transmit a PSSCH (e.g., 2^{nd}-stage SCI, MAC PDU, data, etc.) related to the PSCCH to the second UE. In step S830, the first UE may receive a PSFCH related to the PSCCH/PSSCH from the second UE.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1^{st} SCI, a first SCI, a 1^{st}-stage SCI or a 1^{st}-stage SCI format, and a SCI transmitted through a PSSCH may be referred to as a 2^{nd} SCI, a second SCI, a 2^{nd}-stage SCI or a 2^{nd}-stage SCI format. For example, the 1^{st}-stage SCI format may include a SCI format 1-A, and the 2^{nd}-stage SCI format may include a SCI format 2-A and/or a SCI format 2-B.

Hereinafter, an example of SCI format 1-A will be described.

SCI format 1-A is used for the scheduling of PSSCH and 2nd-stage-SCI on PSSCH.

The following information is transmitted by means of the SCI format 1-A:
- Priority - 3 bits
- Frequency resource assignment - ceiling (log₂(N^{SL}_{subChannel}(N^{SL}_{subChannel}+1)/2)) bits when the value of the higher layer parameter sl-MaxNumPerReserve is configured to 2; otherwise ceiling log₂(N^{SL}_{subChannel}(N^{SL}_{subChannel}+1)(2N^{SL}_{subChannel}+1)/6) bits when the value of the higher layer parameter sl-MaxNumPerReserve is configured to 3
- Time resource assignment - 5 bits when the value of the higher layer parameter sl-MaxNumPerReserve is configured to 2; otherwise 9 bits when the value of the higher layer parameter sl-MaxNumPerReserve is configured to 3
- Resource reservation period - ceiling (log₂ N_{rsv_period}) bits, where N_{rsv_period} is the number of entries in the higher layer parameter sl-ResourceReservePeriodList, if higher layer parameter sl-MultiReserveResource is configured; 0 bit otherwise
- DMRS pattern - ceiling (log₂ Nₚₐₜₜₑᵣₙ) bits, where Nₚₐₜₜₑᵣₙ is the number of DMRS patterns configured by higher layer parameter sl-PSSCH-DMRS-TimePatternList
- 2^{nd}-stage SCI format - 2 bits as defined in Table 5
- Beta_offset indicator - 2 bits as provided by higher layer parameter sl-BetaOffsets2ndSCI
- Number of DMRS port - 1 bit as defined in Table 6
- Modulation and coding scheme - 5 bits
- Additional MCS table indicator - 1 bit if one MCS table is configured by higher layer parameter sl-Additional-MCS-Table; 2 bits if two MCS tables are configured by higher layer parameter sl- Additional-MCS-Table; 0 bit otherwise
- PSFCH overhead indication - 1 bit if higher layer parameter sl-PSFCH-Period = 2 or 4; 0 bit otherwise
- Reserved - a number of bits as determined by higher layer parameter sl-NumReservedBits, with value set to zero.

**[Table 5]**

| Value of 2nd-stage SCI format field | 2nd-stage SCI format |
|---|---|
| 00 | SCI format 2-A |
| 01 | SCI format 2-B |
| 10 | Reserved |
| 11 | Reserved |

**[Table 6]**

| Value of the Number of DMRS port field | Antenna ports |
|---|---|
| 0 | 1000 |
| 1 | 1000 and 1001 |

Hereinafter, an example of SCI format 2-A will be described.

SCI format 2-A is used for the decoding of PSSCH, with HARQ operation when HARQ-ACK information includes ACK or NACK, when HARQ-ACK information includes only NACK, or when there is no feedback of HARQ-ACK information.

The following information is transmitted by means of the SCI format 2-A:
- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Cast type indicator - 2 bits as defined in Table 7
- CSI request - 1 bit

**[Table 7]**

| Value of Cast type indicator | Cast type |
|---|---|
| 00 | Broadcast |
| 01 | Groupcast when HARQ-ACK information includes ACK or NACK |
| 10 | Unicast |
| 11 | Groupcast when HARQ-ACK information includes only NACK |

Hereinafter, an example of SCI format 2-B will be described.

SCI format 2-B is used for the decoding of PSSCH, with HARQ operation when HARQ-ACK information includes only NACK, or when there is no feedback of HARQ-ACK information.

The following information is transmitted by means of the SCI format 2-B:
- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Zone ID - 12 bits
- Communication range requirement - 4 bits determined by higher layer parameter sl-ZoneConfigMCR-Index

Referring to (a) or (b) of FIG. 8, in step S830, the first UE may receive the PSFCH. For example, the first UE and the second UE may determine a PSFCH resource, and the second UE may transmit HARQ feedback to the first UE using the PSFCH resource.

Referring to (a) of FIG. 8, in step S840, the first UE may transmit SL HARQ feedback to the base station through the PUCCH and/or the PUSCH.

FIG. 9 shows three cast types, based on an embodiment of the present disclosure. The embodiment of FIG. 9 may be combined with various embodiments of the present disclosure. Specifically, (a) of FIG. 9 shows broadcast-type SL communication, (b) of FIG. 9 shows unicast type-SL communication, and (c) of FIG. 9 shows groupcast-type SL communication. In case of the unicast-type SL communication, a UE may perform one-to-one communication with respect to another UE. In case of the groupcast-type SL transmission, the UE may perform SL communication with respect to one or more UEs in a group to which the UE belongs. In various embodiments of the present disclosure, SL groupcast communication may be replaced with SL multicast communication, SL one-to-many communication, or the like.

Hereinafter, a hybrid automatic repeat request (HARQ) procedure will be described.

For example, the SL HARQ feedback may be enabled for unicast. For example, the SL HARQ feedback may be enabled for groupcast. For example, two HARQ feedback options may be supported for groupcast.
(1) Groupcast option 1: After the receiving UE decodes the PSCCH of which the target is the receiving UE, if the receiving UE fails in decoding of a transport block related to the PSCCH, the receiving UE may transmit negative acknowledgement (NACK) to the transmitting UE through a PSFCH. Otherwise, if the receiving UE decodes the PSCCH of which the target is the receiving UE and if the receiving UE successfully decodes the transport block related to the PSCCH, the receiving UE may not transmit positive acknowledgement (ACK) to the transmitting UE.
(2) Groupcast option 2: After the receiving UE decodes the PSCCH of which the target is the receiving UE, if the receiving UE fails in decoding of the transport block related to the PSCCH, the receiving UE may transmit NACK to the transmitting UE through the PSFCH. In addition, if the receiving UE decodes the PSCCH of which the target is the receiving UE and if the receiving UE successfully decodes the transport block related to the PSCCH, the receiving UE may transmit ACK to the transmitting UE through the PSFCH.

Hereinafter, UE procedure for reporting HARQ-ACK on sidelink will be described.

A UE can be indicated by an SCI format scheduling a PSSCH reception, in one or more sub-channels from a number of N^{PSSCH}_{subch} sub-channels, to transmit a PSFCH with HARQ-ACK information in response to the PSSCH reception. The UE provides HARQ-ACK information that includes ACK or NACK, or only NACK.

A UE can be provided, by sl-PSFCH-Period-r16, a number of slots in a resource pool for a period of PSFCH transmission occasion resources. If the number is zero, PSFCH transmissions from the UE in the resource pool are disabled. A UE expects that a slot t'ₖ^{SL} (0 ≤ k < T'ₘₐₓ) has a PSFCH transmission occasion resource if k mod N^{PSFCH}_{PSSCH} = 0, where t'ₖ^{SL} is a slot that belongs to the resource pool, T'ₘₐₓ is a number of slots that belong to the resource pool within 10240 msec, and N^{PSFCH}_{PSSCH} is provided by sl-PSFCH-Period-r16. A UE may be indicated by higher layers to not transmit a PSFCH in response to a PSSCH reception.If a UE receives a PSSCH in a resource pool and the HARQ feedback enabled/disabled indicator field in an associated SCI format 2-A or a SCI format 2-B has value 1, the UE provides the HARQ-ACK information in a PSFCH transmission in the resource pool. The UE transmits the PSFCH in a first slot that includes PSFCH resources and is at least a number of slots, provided by sl-MinTimeGapPSFCH-r16, of the resource pool after a last slot of the PSSCH reception.

A UE is provided by sl-PSFCH-RB-Set-r16 a set of M^{PSFCH}_{PRB,set} PRBs in a resource pool for PSFCH transmission in a PRB of the resource pool. For a number of N_{subch} sub-channels for the resource pool, provided by sl-NumSubchannel, and a number of PSSCH slots associated with a PSFCH slot that is less than or equal to N^{PSFCH}_{PSSCH}, the UE allocates the [(i+j·N^{PSFCH}_{PSSCH})·M^{PSFCH}_{subch,slot}, (i+1+j·N^{PSFCH}_{PSSCH})·M^{PSFCH}_{subch,slot}-1] PRBs from the M_{PRB,set}^{PSFCH} PRBs to slot i among the PSSCH slots associated with the PSFCH slot and sub-channel j, where M^{PSFCH}_{subch,slot}= M^{PSFCH}_{PRB,set}/(N_{subch}·N^{PSFCH}_{PSSCH}), 0 ≤ i < N^{PSFCH}_{PSSCH}, 0 ≤ j < N_{subch}, and the allocation starts in an ascending order of i and continues in an ascending order of j. The UE expects that M^{PSFCH}_{PRB,set} is a multiple of N_{subch}·N^{PSFCH}_{PSSCH}.

A UE determines a number of PSFCH resources available for multiplexing HARQ-ACK information in a PSFCH transmission as R^{PSFCH}_{PRB,CS} = N^{PSFCH}_{type}·M^{PSFCH}_{subch,slot}·N^{PSFCH}_{CS} where N^{PSFCH}_{CS} is a number of cyclic shift pairs for the resource pool and, based on an indication by higher layers,
- N^{PSFCH}_{type} = 1 and the M^{PSFCH}_{subch,slot} PRBs are associated with the starting sub-channel of the corresponding PSSCH
- N^{PSFCH}_{type} = N^{PSSCH}_{subch} and the N^{PSSCH}_{subch}·M^{PSFCH}_{subch,slot} PRBs are associated with one or more sub-channels from the N^{PSSCH}_{subch} sub-channels of the corresponding PSSCH

The PSFCH resources are first indexed according to an ascending order of the PRB index, from the N^{PSFCH}_{type}·M^{PSFCH}_{subch,slot} PRBs, and then according to an ascending order of the cyclic shift pair index from the N^{PSFCH}_{CS} cyclic shift pairs.

A UE determines an index of a PSFCH resource for a PSFCH transmission in response to a PSSCH reception as (P_{ID} + M_{ID}) mod R^{PSFCH}_{PRB,CS} where P_{ID} is a physical layer source ID provided by SCI format 2-A or 2-B scheduling the PSSCH reception, and M_{ID} is the identity of the UE receiving the PSSCH as indicated by higher layers if the UE detects a SCI format 2-A with Cast type indicator field value of "01"; otherwise, M_{ID} is zero.

A UE determines a m₀ value, for computing a value of cyclic shift α, from a cyclic shift pair index corresponding to a PSFCH resource index and from N^{PSFCH}_{CS} using Table 8.

**[Table 8]**

| N^{PSFCH}_{CS} | m₀ | | | | | |
|---|---|---|---|---|---|---|
| | cyclic shift pair index 0 | cyclic shift pair index 1 | cyclic shift pair index 2 | cyclic shift pair index 3 | cyclic shift pair index 4 | cyclic shift pair index 5 |
| 1 | 0 | - | - | - | - | - |
| 2 | 0 | 3 | - | - | - | - |
| 3 | 0 | 2 | 4 | - | - | - |
| 6 | 0 | 1 | 2 | 3 | 4 | 5 |

A UE determines a m_{cs} value, for computing a value of cyclic shift α, as in Table 9 if the UE detects a SCI format 2-A with Cast type indicator field value of "01" or "10", or as in Table 10 if the UE detects a SCI format 2-B or a SCI format 2-A with Cast type indicator field value of "11". The UE applies one cyclic shift from a cyclic shift pair to a sequence used for the PSFCH transmission.

**[Table 9]**

| HARQ-ACK Value | 0 (NACK) | 1 (ACK) |
|---|---|---|
| Sequence cyclic shift | 0 | 6 |

**[Table 10]**

| HARQ-ACK Value | 0 (NACK) | 1 (ACK) |
|---|---|---|
| Sequence cyclic shift | 0 | N/A |

Meanwhile, a set of (equally spaced) non-contiguous RBs on a frequency may be allocated to a UE. This set of non-contiguous RBs may be referred to as interlaced RBs. This may be useful in spectrum (e.g., shared spectrum) that is subject to regulations such as occupied channel bandwidth (OCB), power spectral density (PSD), etc.

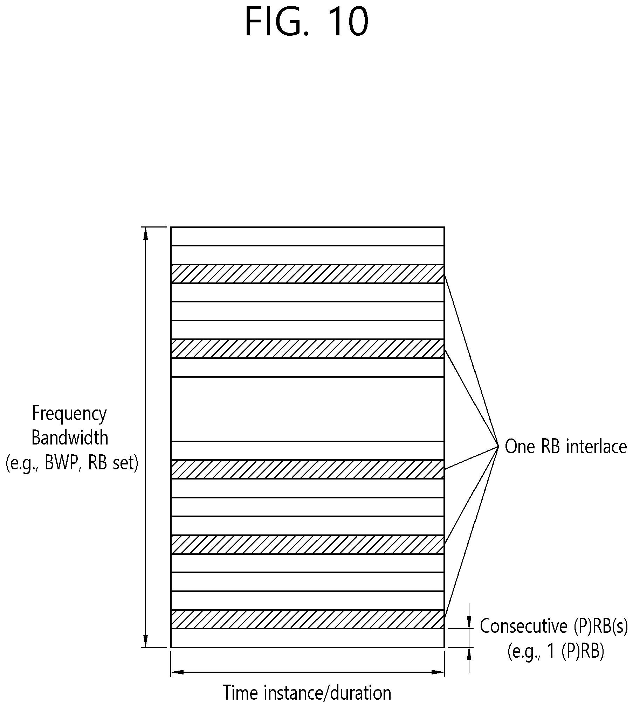

FIG. 10 shows an interlaced RB, based on an embodiment of the present disclosure. The embodiment of FIG. 10 may be combined with various embodiments of the present disclosure.

Referring to FIG. 10, interlaces of RBs may be defined in a frequency domain. An interlace m∈{0, 1, ..., M-1} may comprise (common) RBs {m, M+m, 2M+m, 3M+m, ...}, where M may represent the number of interlaced RBs given by Table 11.

**[Table 11]**

| u | M |
|---|---|
| 0 | 10 |
| 1 | 5 |

A communication device (e.g., a device, a UE, a vehicle, a drone, etc. proposed in various embodiments of the present disclosure) may transmit a signal/channel by using one or more interlaced RBs.

Meanwhile, in the next-generation system, the UE may perform a sidelink transmission operation and/or a sidelink reception operation in an unlicensed band. Meanwhile, for the operation in the unlicensed band, a channel sensing operation (e.g., energy detection/measurement) for a channel to be used may be performed before the UE performs transmission, depending on band-specific regulations or requirements. Only if the channel or the set of RBs to be used is determined to be IDLE as a result of the channel sensing (e.g., if the measured energy is less than or equal to a specific threshold), the UE may perform transmission in the unlicensed band. If the channel or the RB set to be used is determined to be BUSY as a result of the channel sensing (e.g., if the measured energy is greater than or equal to a specific threshold), the UE may cancel all or part of transmission in the unlicensed band. Meanwhile, in the operation in the unlicensed band, the UE may skip or simplify the channel sensing operation (make a channel sensing interval relatively small) within a certain time after transmission within a specific time duration. On the other hand, after the certain time has passed after the transmission, the UE may determine whether to transmit after performing the usual channel sensing operation. Meanwhile, for transmission in the unlicensed band, power spectral density (PSD) and/or a size of frequency occupation domain and/or a time interval of a signal/channel transmitted by the UE may be greater than or equal to a certain level, respectively, depending on regulations or requirements. Meanwhile, in the unlicensed band, in order to simplify channel sensing, it may be informed through channel occupancy time (COT) duration information that a channel obtained based on initial general channel sensing is occupied for a certain time, and the maximum length of the COT duration may be configured differently depending on a priority value of a data packet or a service.

Meanwhile, a base station may share a COT duration obtained by the base station based on channel sensing through DCI transmission, and the UE may perform a specific (indicated) channel sensing type and/or CP extension within the COT duration based on DCI information received from the base station. Meanwhile, a UE may share a COT duration obtained by the UE based on channel sensing with a base station that is a destination of UL transmission of the UE, and the related information may be provided through UL through configured grant-uplink control information (CG-UCI). In the above situation, the base station may perform simplified channel sensing within the COT duration shared by the UE. In the case of sidelink communication, there is a situation in which a UE receives, from a base station, information on resources to be used for sidelink transmission through DCI or RRC signaling, such as the mode 1 resource allocation (RA) operation, and there is a situation in which a UE performs sidelink transmission and reception through an inter-UE sensing operation without the assistance of the base station, such as the mode 2 RA operation.

Meanwhile, in the case of the channel access type 1, which may be used regardless of the channel occupancy time (COT) configuration, DL transmission may be performed based on the procedure shown in Table 12 and Table 13.

**[Table 12]**

| | |
|---|---|
| The eNB/gNB may transmit a transmission after first sensing the channel to be idle during the sensing slot durations of a defer duration *T_{d}* and after the counter *N* is zero in step 4. The counter *N* is adjusted by sensing the channel for additional sensing slot duration(s) according to the steps below: | |
| | 1) set *N* = *Nᵢₙᵢₜ*, where *Nᵢₙᵢₜ* is a random number uniformly distributed between 0 and *CWₚ,* and go to step 4; |
| | 2) if *N* > 0 and the eNB/gNB chooses to decrement the counter, set *N = N* - 1; |
| | 3) sense the channel for an additional sensing slot duration, and if the additional sensing slot duration is idle, go to step 4; else, go to step 5; |
| | 4) if *N* = 0, stop; else, go to step 2. |
| | 5) sense the channel until either a busy sensing slot is detected within an additional defer duration *T_{d}* or all the sensing slots of the additional defer duration *T_{d}* are detected to be idle; |
| | 6) if the channel is sensed to be idle during all the sensing slot durations of the additional defer duration *T_{d}*, go to step 4; else, go to step 5; |
| If an eNB/gNB has not transmitted a transmission after step 4 in the procedure above, the eNB/gNB may transmit a transmission on the channel, if the channel is sensed to be idle at least in a sensing slot duration *Tₛₗ* when the eNB/gNB is ready to transmit and if the channel has been sensed to be idle during all the sensing slot durations of a defer duration *T_{d}* immediately before this transmission. If the channel has not been sensed to be idle in a sensing slot duration *Tₛₗ* when the eNB/gNB first senses the channel after it is ready to transmit or if the channel has been sensed to be not idle during any of the sensing slot durations of a defer duration *T_{d}* immediately before this intended transmission, the eNB/gNB proceeds to step 1 after sensing the channel to be idle during the sensing slot durations of a defer duration *T_{d}*. | |
| The defer duration *T_{d}* consists of duration *T_{f} =* 16us immediately followed by *mₚ* consecutive sensing slot durations *Tₛₗ, and T_{f}* includes an idle sensing slot duration *Tₛₗ* at start of *T_{f}.* | |

**[Table 13]**

| | | |
|---|---|---|
| If a gNB transmits transmissions including PDSCH that are associated with channel access priority class *p* on a channel, the gNB maintains the contention window value *CWₚ* and adjusts *CWₚ* before step 1 of the procedure described in clause 4.1.1 for those transmissions using the following steps: | | |
| | 1) For every priority class *p* ∈ {1,2,3,4}, set *CWₚ = CW_{min,p}*. | |
| | 2) If HARQ-ACK feedback is available after the last update of *Wₚ* , go to step 3. Otherwise, if the gNB transmission after procedure described in clause 4.1.1 does not include a retransmission or is transmitted within a duration *T_{w}* from the end of the *reference duration* corresponding to the earliest DL channel occupancy after the last update of *CWₚ,* go to step 5; otherwise go to step 4. | |
| | 3) The HARQ-ACK feedback(s) corresponding to PDSCH(s) in the reference duration for the latest DL channel occupancy for which HARQ-ACK feedback is available is used as follows: | |
| | | a. If at least one HARQ-ACK feedback is 'ACK' for PDSCH(s) with transport block based feedback or at least 10% of HARQ-ACK feedbacks is 'ACK' for PDSCH CBGs transmitted at least partially on the channel with code block group based feedback, go to step 1; otherwise go to step 4. |
| | 4) Increase *CWₚ* for every priority class *p* ∈ {1,2,3,4} to the next higher allowed value. | |
| | 5) For every priority class p ∈ {1,2,3,4}, maintain CWₚ as it is; go to step 2. | |
| The *reference duration* and duration *T_{w}* in the procedure above are defined as follows: | | |
| | - The *reference duration* corresponding to a channel occupancy initiated by the gNB including transmission of PDSCH(s) is defined in this clause as a duration starting from the beginning of the channel occupancy until the end of the first slot where at least one unicast PDSCH is transmitted over all the resources allocated for the PDSCH, or until the end of the first transmission burst by the gNB that contains unicast PDSCH(s) transmitted over all the resources allocated for the PDSCH, whichever occurs earlier. If the channel occupancy includes a unicast PDSCH, but it does not include any unicast PDSCH transmitted over all the resources allocated for that PDSCH, then, the duration of the first transmission burst by the gNB within the channel occupancy that contains unicast PDSCH(s) is the *reference duration* for CWS adjustment. | |
| | - *T_{W}* = max (*T_{A}*,*T_{B}* + 1ms) where *T_{B}* is the duration of the transmission burst from start of the *reference duration* in ms and *T_{A} = 5ms* if the absence of any other technology sharing the channel can not be guaranteed on a long-term basis (e.g. by level of regulation), and *T_{A}* = 10ms otherwise. | |
| If a gNB transmits transmissions using Type 1 channel access procedures associated with the channel access priority class *p* on a channel and the transmissions are not associated with explicit HARQ-ACK feedbacks by the corresponding UE(s), the gNB adjusts *CWₚ* before step 1 in the procedures described in subclase 4.1.1, using the latest *CWₚ* used for any DL transmissions on the channel using Type 1 channel access procedures associated with the channel access priority class *p*. If the corresponding channel access priority class *p* has not been used for any DL transmissions on the channel, *CWₚ = CW_{min,p}* is used. | | |

Meanwhile, for the channel access type 1, which may be used regardless of the channel occupancy time (COT) configuration, UL transmission may be performed based on the procedure shown in Table 14 to Table 15.

**[Table 14]**

| | |
|---|---|
| A UE may transmit the transmission using Type 1 channel access procedure after first sensing the channel to be idle during the slot durations of a defer duration *T_{d}*, and after the counter *N* is zero in step 4. The counter *N* is adjusted by sensing the channel for additional slot duration(s) according to the steps described below. | |
| | 1) set *N* = *Nᵢₙᵢₜ*, where *Nᵢₙᵢₜ* is a random number uniformly distributed between 0 and *CWₚ,* and go to step 4; |
| | 2) if *N* > 0 and the UE chooses to decrement the counter, set *N* = *N* - 1; |
| | 3) sense the channel for an additional slot duration, and if the additional slot duration is idle, go to step 4; else, go to step 5; |
| | 4) if *N* = 0, stop; else, go to step 2. |
| | 5) sense the channel until either a busy slot is detected within an additional defer duration *T_{d}* or all the slots of the additional defer duration *T_{d}* are detected to be idle; |
| | 6) if the channel is sensed to be idle during all the slot durations of the additional defer duration *T_{d}*, go to step 4; else, go to step 5; |
| If a UE has not transmitted a UL transmission on a channel on which UL transmission(s) are performed after step 4 in the procedure above, the UE may transmit a transmission on the channel, if the channel is sensed to be idle at least in a sensing slot duration *Tₛₗ* when the UE is ready to transmit the transmission and if the channel has been sensed to be idle during all the slot durations of a defer duration *T_{d}* immediately before the transmission. If the channel has not been sensed to be idle in a sensing slot duration *Tₛₗ* when the UE first senses the channel after it is ready to transmit, or if the channel has not been sensed to be idle during any of the sensing slot durations of a defer duration *T_{d}* immediately before the intended transmission, the UE proceeds to step 1 after sensing the channel to be idle during the slot durations of a defer duration *T_{d}*. | |
| The defer duration *T_{d}* consists of duration *T_{f} =* 16us immediately followed by *mₚ* consecutive slot durations where each slot duration is *Tₛₗ* = 9us, and *T_{f}* includes an idle slot duration *Tₛₗ* at start of *T_{f}.* | |

**[Table 15]**

| | | |
|---|---|---|
| If a UE transmits transmissions using Type 1 channel access procedures that are associated with channel access priority class *p* on a channel, the UE maintains the contention window value *CWₚ* and adjusts *CWₚ* for those transmissions before step 1 of the procedure described in clause 4.2.1.1, using the following steps: | | |
| | 1) For every priority class *p* ∈ {1,2,3,4}, set *CWₚ = CW_{min,p}*; | |
| | 2) If HARQ-ACK feedback is available after the last update of *CWₚ,* go to step 3. Otherwise, if the UE transmission after procedure described in clause 4.2.1.1 does not include a retransmission or is transmitted within a duration *T_{w}* from the end of the *reference duration* corresponding to the earliest UL channel occupancy after the last update of *CWₚ,* go to step 5; otherwise go to step 4. | |
| | 3) The HARQ-ACK feedback(s) corresponding to PUSCH(s) in the *reference duration* for the latest UL channel occupancy for which HARQ-ACK feedback is available is used as follows: | |
| | | a. If at least one HARQ-ACK feedback is 'ACK' for PUSCH(s) with transport block (TB) based feedback or at least 10% of HARQ-ACK feedbacks are 'ACK' for PUSCH CBGs transmitted at least partially on the channel with code block group (CBG) based feedback, go to step 1; otherwise go to step 4. |
| | 4) Increase *CWₚ* for every priority class *p* ∈ {1,2,3,4} to the next higher allowed value; | |
| | 5) For every priority class *p* ∈ {1,2,3,4}, maintain *CWₚ* as it is; go to step 2. | |
| The HARQ-ACK feedback, *reference duration* and duration *T_{w}* in the procedure above are defined as the following: | | |
| | - For the purpose of contention window adjustment in this clause, HARQ-ACK feedback for PUSCH(s) transmissions are expected to be provided to UE(s) explicitly or implicitly where explicit HARQ-ACK is determined based on the valid HARQ-ACK feedback in a corresponding CG-DFI as described in clause 10.5 in [7], and implicit HARQ-ACK feedback is determined based on the indication for a new transmission or retransmission in the DCI scheduling PUSCH(s) as follows: | |
| | | - If a new transmission is indicated, 'ACK' is assumed for the transport blocks or code block groups in the corresponding PUSCH(s) for the TB-based and CBG-based transmission, respectively. |
| | | - If a retransmission is indicated for TB-based transmissions, 'NACK' is assumed for the transport blocks in the corresponding PUSCH(s). |
| | | - If a retransmission is indicated for CBG-based transmissions, if a bit value in the code block group transmission information (CBGTI) field is '0' or '1' as described in clause 5.1.7.2 in [8], 'ACK' or 'NACK' is assumed for the corresponding CBG in the corresponding PUSCH(s), respectively. |
| | - The *reference duration* corresponding to a channel occupancy initiated by the UE including transmission of PUSCH(s) is defined in this clause as a duration starting from the beginning of the channel occupancy until the end of the first slot where at least one PUSCH is transmitted over all the resources allocated for the PUSCH, or until | |
| | | the end of the first transmission burst by the UE that contains PUSCH(s) transmitted over all the resources allocated for the PUSCH, whichever occurs earlier. If the channel occupancy includes a PUSCH, but it does not include any PUSCH transmitted over all the resources allocated for that PUSCH, then, the duration of the first transmission burst by the UE within the channel occupancy that contains PUSCH(s) is the *reference duration* for CWS adjustment. |
| | | - *T_{W}* = max (*T_{A},T_{B}* + 1ms) where *T_{B}* is the duration of the transmission burst from start of the *reference duration* in ms and *T_{A}* = 5ms if the absence of any other technology sharing the channel cannot be guaranteed on a long-term basis (e.g. by level of regulation), and *T_{A}* = 10ms otherwise. |

Meanwhile, the channel access type 2, which is a simplified channel access type, may be used within a channel occupancy time (COT) before transmission, and DL transmission may be performed based on the procedure shown in Table 16.

**[Table 16]**

| | |
|---|---|
| 4.1.2 Type 2 DL channel access procedures | |
| This clause describes channel access procedures to be performed by an eNB/gNB where the time duration spanned by sensing slots that are sensed to be idle before a downlink transmission(s) is deterministic. | |
| If an eNB performs Type 2 DL channel access procedures, it follows the procedures described in clause 4.1.2.1. | |
| Type 2A channel access procedures as described in clause 4.1.2.1 are only applicable to the following transmission(s) performed by an eNB/gNB: | |
| | - Transmission(s) initiated by an eNB including discovery burst and not including PDSCH where the transmission(s) duration is at most 1*ms*, or |
| | - Transmission(s) initiated by a gNB with only discovery burst or with discovery burst multiplexed with non-unicast information, where the transmission(s) duration is at most 1*ms*, and the discovery burst duty cycle is at most 1/20, or |
| | - Transmission(s) by an eNB/ gNB following transmission(s) by a UE after a gap of 25us in a shared channel occupancy as described in clause 4.1.3. |
| Type 2B or Type 2C DL channel access procedures as described in clause 4.1.2.2 and 4.1.2.3, respectively, are applicable to the transmission(s) performed by a gNB following transmission(s) by a UE after a gap of 16us or up to 16us, respectively, in a shared channel occupancy as described in clause 4.1.3. | |
| 4.1.2.1 Type 2A DL channel access procedures | |
| An eNB/gNB may transmit a DL transmission immediately after sensing the channel to be idle for at least a sensing interval *T_{short_dl}* = *25us. T_{short_dl}* consists of a duration *T_{f} =* 16us immediately followed by one sensing slot and *T_{f}* includes a sensing slot at start of *T_{f}.* The channel is considered to be idle for *T_{short_dl}* if both sensing slots of *T_{short_dl}* are sensed to be idle. | |
| 4.1.2.2 Type 2B DL channel access procedures | |
| A gNB may transmit a DL transmission immediately after sensing the channel to be idle within a duration of *T_{f} =* 16*us. T_{f}* includes a sensing slot that occurs within the last 9us of *T_{f}.* The channel is considered to be idle within the duration *T_{f}* if the channel is sensed to be idle for a total of at least 5us with at least 4us of sensing occurring in the sensing slot. | |
| 4.1.2.3 Type 2C DL channel access procedures | |
| When a gNB follows the procedures in this clause for transmission of a DL transmission, the gNB does not sense the channel before transmission of the DL transmission. The duration of the corresponding DL transmission is at most 584us. | |

Meanwhile, the channel access type 2, which is a simplified channel access type, may be used within a channel occupancy time (COT) before transmission, and UL transmission may be performed based on the procedure shown in Table 17.

**[Table 17]**

| |
|---|
| 4.2.1.2 Type 2 UL channel access procedure |
| This clause describes channel access procedures by UE where the time duration spanned by the sensing slots that are sensed to be idle before a UL transmission(s) is deterministic. |
| If a UE is indicated by an eNB to perform Type 2 UL channel access procedures, the UE follows the procedures described in clause 4.2.1.2.1. |
| 4.2.1.2.1 Type 2A UL channel access procedure |
| If a UE is indicated to perform Type 2A UL channel access procedures, the UE uses Type 2A UL channel access procedures for a UL transmission. The UE may transmit the transmission immediately after sensing the channel to be idle for at least a sensing interval *T*_{short_ul} = 25us. *T*_{short_ul} consists of a duration *T_{f}* = 16usimmediately followed by one sensing slot and *T_{f}*includes a sensing slot at start of *T_{f}.* The channel is considered to be idle for *T*_{short_ul} if both sensing slots of *T*_{*short*_ul}.are sensed to be idle. |
| 4.2.1.2.2 Type 2B UL channel access procedure |
| If a UE is indicated to perform Type 2B UL channel access procedures, the UE uses Type 2B UL channel access procedure for a UL transmission. The UE may transmit the transmission immediately after sensing the channel to be idle within a duration of *T_{f} = 16us. T_{f}* includes a sensing slot that occurs within the last 9us of *T_{f}.* The channel is considered to be idle within the duration *T_{f}* if the channel is sensed to be idle for total of at least 5us with at least 4us of sensing occurring in the sensing slot. |
| 4.2.1.2.3 Type 2C UL channel access procedure |
| If a UE is indicated to perform Type 2C UL channel access procedures for a UL transmission, the UE does not sense the channel before the transmission. The duration of the corresponding UL transmission is at most 584us. |

In an embodiment of the present disclosure, a TYPE 2A SL channel access may be in the same manner as the TYPE 2A DL and/or UL channel access. For example, the TYPE 2A SL channel access may be performed in a sensing interval T_short_sl=25us, where the interval may consist of a duration T_f=16us immediately followed by one sensing slot and T_f may include a sensing slot at start of T_f. The basic IDLE determination in the TYPE 2A SL channel access may also borrow IDLE determination from the DL or UL channel access.

In an embodiment of the present disclosure, a TYPE 2B SL channel access may be in the same manner as the TYPE 2B DL and/or UL channel access. For example, in the case of the TYPE 2B SL channel access, the UE may perform transmission immediately after sensing a channel to be idle within a duration of T_f= 16us. T_f may include a sensing slot that occurs within the last 9us of T_f. The basic IDLE determination in the TYPE 2B SL channel access may also borrow IDLE determination from the DL or UL channel access.

In an embodiment of the present disclosure, a TYPE 2C SL channel access may be in the same manner as the TYPE 2C DL and/or UL channel access. For example, in the case of the TYPE 2C SL channel access, the UE may not perform channel sensing. Instead, the time duration of SL transmission may be at most 584us.

In an embodiment of the present disclosure, a TYPE 1 SL channel access may be in the same manner as the TYPE 1 DL and/or UL channel access. For example, the UE may randomly derive an integer value N based on a contention window size corresponding to a priority class. Then, if a channel sensing result for a defer duration T_d corresponding to the priority class is idle, the UE may decrease the N-1 counter value in units of T_sl when IDLE. If the value of the counter is zero, the UE may occupy the RB set or the channel subject to channel sensing. If a part of a channel sensing result for the T_sl duration is determined to be busy, the UE may keep the counter value until a channel sensing result for the defer duration T_d is idle, and the UE may continue to perform channel sensing. In the above, the defer duration T_d may consist of T_f=16us and contiguous m_p * T_sl after T_f=16us, where m_p may be a value determined by the priority class (p), and T_sl=9us may be a time interval in which channel sensing is performed.

Hereinafter, a channel access priority class (CAPC) is described.

The CAPCs of MAC CEs and radio bearers may be fixed or configured to operate in FR1:
- Fixed to lowest priority for padding buffer status report (BSR) and recommended bit rate MAC CE;
- Fixed to highest priority for SRB0, SRB1, SRB3 and other MAC CEs;
- Configured by the base station for SRB2 and DRB.

When selecting a CAPC of a DRB, the base station considers fairness between other traffic types and transmissions while considering 5QI of all QoS flows multiplexed to the corresponding DRB. Table 18 shows which CAPC should be used for standardized 5QI, that is, a CAPC to be used for a given QoS flow. For standardized 5QI, CAPCs are defined as shown in the table below, and for non-standardized 5QI, the CAPC with the best QoS characteristics should be used.

**[Table 18]**

| CAPC | 5QI |
|---|---|
| 1 | 1, 3, 5, 65, 66, 67, 69, 70, 79, 80, 82, 83, 84, 85 |
| 2 | 2, 7, 71 |
| 3 | 4, 6, 8, 9, 72, 73, 74, 76 |
| 4 | - |
| NOTE: A lower CAPC value indicates a higher priority. | |

Table 19 shows that mₚ, a minimum contention window (CW), a maximum CW, a maximum channel occupancy time (MCOT), and an allowed CW size vary depending on channel access priority classes, in DL.

**[Table 19]**

| Channel Access Priority Class (p) | mₚ | CW_{min,p} | CW_{max,p} | T_{mcot,p} | allowed CWₚ sizes |
|---|---|---|---|---|---|
| 1 | 1 | 3 | 7 | 2 ms | {3,7} |
| 2 | 1 | 7 | 15 | 3 ms | {7,15} |
| 3 | 3 | 15 | 63 | 8 or 10 ms | {15,31,63} |
| 4 | 7 | 15 | 1023 | 8 or 10 ms | {15,31,63,127,255,511,1023} |

Referring to Table 19, a contention window size (CWS), a maximum COT value, etc. for each CAPC may be defined. For example, T_{d} may be equal to T_{f} + mₚ * Tₛₗ (T_{d} = T_{f} + mₚ * Tₛₗ).

Table 20 shows that mₚ, a minimum contention window (CW), a maximum CW, a maximum channel occupancy time (MCOT), and an allowed CW size vary depending on channel access priority classes, in UL.

**[Table 20]**

| Channel Access Priority Class (p) | mₚ | CW_{min,p} | CW_{max,p} | T_{ulmcot,p} | allowed CWₚ sizes |
|---|---|---|---|---|---|
| 1 | 2 | 3 | 7 | 2 ms | {3,7} |
| 2 | 2 | 7 | 15 | 4 ms | {7,15} |
| 3 | 3 | 15 | 1023 | 6 or 10 ms | {15,31,63,127,255,511,1023} |
| 4 | 7 | 15 | 1023 | 6 or 10 ms | {15,31,63,127,255,511,1023} |

Referring to Table 20, a contention window size (CWS), a maximum COT value, etc. for each CAPC may be defined. For example, T_{d} may be equal to T_{f} + mₚ * Tₛₗ (T_{d} = T_{f} + mₚ * Tₛₗ).

In an embodiment of the present disclosure, the UE may not be ready to transmit sidelink transmission while the UE has occupied a channel through the TYPE 1 SL channel access. In this case, the UE may configure a defer duration of length T_d and a sensing duration of length T_sl immediately before the sidelink transmission that it is ready to transmit. Herein, if both are idle, the UE may immediately perform the sidelink transmission, but if at least one of the defer duration and the sensing duration is busy, the UE may again perform the TYPE 1 SL channel access. For example, if the sidelink transmission is not possible at a time when channel sensing ends (e.g., if the end of the channel sensing is after the start of the sidelink transmission), the UE may reselect sidelink transmission resource(s). For example, the reselected resource may be selected by considering the end time of the channel sensing and/or the length of the remaining sensing interval, etc. For example, the remaining sensing interval may be a value derived from assuming that all channel sensing is IDLE.

For example, in the present disclosure, a TX UE may be interpreted as: a UE which transmits data (e.g., PSCCH/PSSCH) (to (target) RX UE(s)), and/or a UE which transmits SL CSI-RS (and/or SL CSI report request indicator) (to (target) RX UE(s)), and/or a UE which transmits (pre-defined) RS(s) (e.g., PSSCH DM-RS) to be used for SL (L1) RSRP measurement (and/or SL (L1) RSRP report request indicator) (to (target) RX UE(s)), and/or a UE which transmits a (control) channel (e.g., PSCCH, PSSCH) and/or RS(s) (e.g., DM-RS, CSI-RS) (on the (control) channel) to be used for SL radio link monitoring (RLM) operation (and/or SL radio link failure (RLF) operation) (of (target) RX UE(s)).

For example, in the present disclosure, an RX UE may be interpreted as: a UE which transmits SL HARQ feedback (to the TX UE), based on whether or not decoding of data received from the TX UE succeeds (and/or whether or not detection/decoding of a PSCCH (related to a PSSCH scheduling) transmitted by the TX UE succeeds), and/or a UE which transmits SL CSI (to the TX UE) based on SL CSI-RS(s) (and/or SL CSI report request indicator) received from the TX UE, and/or a UE which transmits a SL (L1) RSRP measurement value (to the TX UE) based on (pre-defined) RS(s) (and/or SL (L1) RSRP report request indicator) received from the TX UE, and/or a UE which transmits its own data (to the TX UE), and/or a UE which performs RLM operation (and/or RLF operation) based on a (pre-configured) (control) channel and/or RS(s) (on the (control) channel) received from the TX UE.

For example, in the present disclosure, the term "PSCCH" may be extended to or interpreted as SCI (and/or first SCI (or second SCI) and/or PSSCH), or vice versa. For example, in the present disclosure, the term "SCI" may be extended to or interpreted as PSCCH (and/or first SCI (or second SCI) and/or PSSCH), or vice versa. For example, in the present disclosure, the term "PSSCH" may be extended to or interpreted as second SCI (and/or PSCCH), or vice versa.

For example, in the present disclosure, the term "configuration/being configured (or definition/being defined)" may be interpreted as being (pre-)configured from a base station (or a network) (through pre-defined signaling (e.g., SIB, MAC, RRC)) (for each resource pool). For example, in the present disclosure, the term "configuration/being configured (or definition/being defined)" may be interpreted as being specified through signaling (e.g., PC5 RRC) pre-defined between UEs. For example, in the present disclosure, the term "RLF" may be extended to or interpreted as out-of-synch (OOS) and/or in-synch (IS), or vice versa. For example, in the present disclosure, the term "RB" may be extended to or interpreted as a subcarrier, or vice versa. For example, in the present disclosure, the term "packet (or traffic)" may be extended to or interpreted as a transport block (TB) (or MAC PDU), or vice versa. For example, in the present disclosure, the term "code block group (CBG) (or CG)" may be extended to or interpreted as a TB, or vice versa. For example, in the present disclosure, the term "source ID" may be extended to or interpreted as "destination ID", or vice versa. For example, in the present disclosure, the term "L1 ID" may be extended to or interpreted as "L2 ID", or vice versa. For example, in the present disclosure, the term "retransmission resource reservation/selection" may be extended to or interpreted as reservation/selection of potential retransmission resource(s) in which actual use is determined based on SL HARQ feedback information. For example, in the present disclosure, the term "sub-selection window" may be extended to or interpreted as a selection window (and/or a pre-configured number of resource sets within the selection window), or vice versa. For example, in the present disclosure, "SL mode 1 operation" may refer to a case where a base station directly schedules SL transmission resource(s) for a UE through pre-defined signaling (e.g., DCI), and "SL mode 2 operation" may refer to a case where a UE independently selects SL transmission resource(s) within a resource pool pre-configured (from a base station or a network). For example, in the present disclosure, the term "dynamic grant" may be extended to or interpreted as a configured (or SPS) grant (or a combination of the configured (or SPS) grant and the dynamic grant), or vice versa. For example, in the present disclosure, the term "configured grant" may be extended to or interpreted as "configured grant type 1" (or "configured grant type 2"), or vice versa. For example, in the present disclosure, the term "channel" may be extended to or interpreted as "signal", or vice versa. For example, in the present disclosure, the term "cast (type)" may be extended to or interpreted as "unicast (and/or groupcast and/or broadcast)", or vice versa. For example, in the present disclosure, the term "resource" may be extended to or interpreted as "slot" (or "symbol"), or vice versa. For example, in the present disclosure, the term "priority" may be extended to or interpreted as "logical channel prioritization (LCP)" (and/or "latency" and/or "reliability" and/or "minimum required communication range" and/or "prose per-packet priority (PPPP)" and/or "priority" and/or "SLRB" and/or "QoS profile/parameter" and/or "requirement"), or vice versa.

Meanwhile, channel occupancy time (COT) may be supported for transmission based on simple channel sensing (e.g., type 2 LBT) in an unlicensed band. For example, the UE may obtain/generate a COT and share the COT with another UE. In the present disclosure, the UE that obtains/generates a COT may be referred to as a COT initiating UE, and the UE that receives a shared COT (e.g., the UE that receives information related to the COT from the COT initiating UE) may be referred to as a COT responding UE. In this case, for example, the simplified channel access type 2 may be used within the COT before transmission.

If a processing time required for decoding shared COT information (of the COT responding UE) between the COT initiating UE and the COT responding UE is not pre-defined/agreed, the COT initiating UE may have difficulty in determining the interval (e.g., slots) that it can use for its transmission after transmitting the shared COT information. Due to this, interruption may occur due to transmission of other SL-U UEs (or WI-FI UEs) in the shared COT duration.

Based on various embodiments of the present disclosure, a method for a UE to perform sidelink communication based on a COT in an unlicensed band and device(s) supporting the same are proposed. In the present disclosure, channel access type 1 may be referred to as various terms such as type 1 channel access, first type channel access, random-backoff-based channel access, etc., and channel access type 2 may be referred to as various terms such as type 2 channel access, second type channel access, channel access for a certain time duration (interval), etc.

Based on an embodiment of the present disclosure, for example, when SL communication is performed in an unlicensed band, for COT sharing operation between UEs, it may be configured to configure COT information.

For example, the PSSCH receiving UE may share an initialized COT duration including PSCCH/PSSCH transmission. For example, the receiving UE may share the COT duration for PSFCH transmission (targeting the PSSCH transmitting UE).

For example, a channel access type and/or whether to apply cyclic prefix extension (CPE) and/or the length of CPE may be jointly coded and indicated through SCI together with SL HARQ-ACK feedback enabled/disabled information.

For example, a channel access type and/or whether to apply CPE and/or the length of CPE may be jointly coded and indicated through SCI together with a cast type or a HARQ-ACK feedback option indicator.

For example, when performing PSCCH/PSSCH transmission, the transmitting UE may indicate the receiving UE a channel type and/or a time interval during which the type 2 channel access procedure can be performed.

For example, the time interval during which the type 2 channel access can be performed may be expressed in the form of the order of the PSFCH occasion based on the PSSCH transmission timing.

For example, the time interval during which the type 2 channel access can be performed may be expressed in the form of the number of logical and/or physical slots and/or symbols based on the PSSCH transmission timing.

For example, the time interval during which the type 2 channel access can be performed may be indicated by an absolute time position, and/or its form may be in the form of a DFN index and/or a slot index and/or a symbol index.

For example, the receiving UE may determine a channel access type based on the timing of PSFCH transmission based on the time interval during which the type 2 channel access can be performed.

For example, the PSSCH receiving UE may share an initialized COT duration including PSCCH/PSSCH transmission. For example, the receiving UE may share the COT duration for PSCCH/PSSCH transmission (targeting the PSSCH transmitting UE). Meanwhile, for example, the transmitting UE may not know when the receiving UE will transmit the PSCCH/PSSCH within the COT duration, and in this case, the transmitting UE may not take any action. In this case, other transmissions may be performed within the COT duration.

For example, at least the transmitting UE needs to maintain the COT through channel occupation until the receiving UE obtains the COT information and uses it to (re)select resource(s) or prepare for transmission. In other words, the interval during which the transmitting UE performs actual transmission for channel occupation needs to be excluded from the shared COT duration.

For example, when providing shared COT duration information, the PSCCH/PSSCH transmitting UE may indicate the start position of the COT that can be used for transmission through SCI and/or the PSSCH.

For example, the UE that has received the COT information may share the COT and use it for transmission after a specific time from the time at which the COT information is transmitted. For example, the specific time may be the MIN-PSSCH-TO-PSFCH timing. For example, the specific time may be T_{PROC,0}. Herein, T_{PROC,0} may be a parameter/information used to define a sensing window in resource allocation mode 2. For example, if resource (re)selection is triggered in slot n, the sensing window may be defined as [n-T₀, n-T_{PROC,0}). For example, T_{PROC,0} may be defined based on subcarrier spacing as shown in Table 21.

**[Table 21]**

| u | T_{PROC,0} |
|---|---|
| 0 | 1 |
| 1 | 1 |
| 2 | 2 |
| 3 | 4 |

For example, the specific time may be T₁. For example, the specific time may be T_{PROC,1}. Herein, T₁ and/or T_{PROC,1} may be parameter(s)/information used to define a selection window in resource allocation mode 2. For example, if resource (re)selection is triggered in slot n, the selection window may be defined as [n+T₁, n+T₂]. For example, T₁ may be selected by the UE implementation within the range of 0 to T_{PROC,1}. For example, T_{PROC,1} may be defined based on subcarrier spacing as shown in Table 22.

**[Table 22]**

| u | T_{PROC,1} |
|---|---|
| 0 | 3 |
| 1 | 5 |
| 2 | 9 |
| 3 | 17 |

For example, the specific time may be determined by MIN-PSSCH-TO-PSFCH TIMING and/or T_{PROC,0} and/or T₁ and/or T_{PROC,1}. For example, the specific time may be in the form of a sum of the above combinations.

Based on an embodiment of the present disclosure, for example, the UE may be configured to perform SL communication based on a physical structure configured/defined based on (part or all of) the rules below in an unlicensed band.

For example, two TTIs, each consisting of 7 symbols (e.g., for PSCCH/PSSCH transmission), may be configured within one slot (e.g., in the case of normal CP), and/or two TTIs, each consisting of 6 symbols, may be configured within one slot (e.g., in the case of extended CP).

For example, in a slot where a PSSCH and a PSFCH are time-division multiplexed (TDM), the position of PSSCH DMRS symbol(s) may be immediately after a PSCCH symbol duration. For example, the mapping of 2ND SCI may be performed from the second symbol of a PSSCH symbol duration (including an AGC symbol).

For example, the position of PSSCH DMRS symbol(s) may be the second symbol and/or the last symbol of a PSSCH symbol duration (including an AGC symbol).

For example, a PSFCH resource occasion may exist every N TTIs based on the TTI. For example, a PSFCH resource occasion may exist per slot-based period and may be located at a specific TTI (e.g., (pre-)configured and/or forward TTI and/or backward TTI) within the slot.

For example, if a symbol group of two PSFCH symbols / a TX-RX switching symbol is referred to as a first symbol group, a TTI corresponding to a PSFCH resource occasion may have a structure of a first symbol group / a first symbol group / a TX-RX switching symbol, a structure of a TX-RX switching symbol / a first symbol group / a first symbol group, or a structure of a first symbol group / a TX-RX switching symbol / a first symbol group. For example, in the case of normal CP, if a symbol group of two PSFCH symbols / a TX-RX switching symbol is referred to as a first symbol group, a TTI corresponding to a PSFCH resource occasion may have a structure of a first symbol group / a first symbol group / a TX-RX switching symbol, a structure of a TX-RX switching symbol / a first symbol group / a first symbol group, or a structure of a first symbol group / a TX-RX switching symbol / a first symbol group.

For example, if a symbol group of two PSFCH symbols / a TX-RX switching symbol is referred to as a first symbol group, a TTI corresponding to a PSFCH resource occasion may have a structure of a first symbol group / a first symbol group. For example, in the case of extended CP, if a symbol group of two PSFCH symbols / a TX-RX switching symbols is referred to as a first symbol group, a TTI corresponding to a PSFCH resource occasion may have a structure of a first symbol group / a first symbol group.

For example, if a symbol group of two PSFCH symbols is referred to as a second symbol group, a TTI corresponding to a PSFCH resource occasion may have a structure of a second symbol group / a second symbol group / a second symbol group / a TX-RX switching symbol. For example, in the case of normal CP, if a symbol group of two PSFCH symbols is referred to as a second symbol group, a TTI corresponding to a PSFCH resource occasion may have a structure of a second symbol group / a second symbol group / a second symbol group / a TX-RX switching symbol.

For example, if a symbol group of two PSFCH symbols is referred to as a second symbol group, a TTI corresponding to a PSFCH resource occasion may have a structure of a second symbol group / a TX-RX switching symbol / a second symbol group / a TX-RX switching symbol. For example, in the case of extended CP, if a symbol group of two PSFCH symbols is referred to as a second symbol group, a TTI corresponding to a PSFCH resource occasion may have a structure of a second symbol group / a TX-RX switching symbol / a second symbol group / a TX-RX switching symbol.

For example, the UE may be allowed to switch TX and/or RX in consecutive PSFCH occasions within the same TTI.

For example, the UE may be allowed to perform only one of PSFCH TX or PSFCH RX (and/or perform PSFCH TX repeating the same information) in consecutive PSFCH occasions within the same TTI, or switching between TX or RX may be allowed only if there is a switching symbol between PSFCH occasions.

Based on an embodiment of the present disclosure, multiple transmission attempt occasions may be configured within one slot based on (part or all of) the following rules, for example, to mitigate transmission occasion deprivation, etc., due to channel access failure (e.g., LBT failure) in an unlicensed band.

For example, multiple AGC and/or (transmission) starting symbols may be configured within one slot. For example, additional AGC symbol(s) and/or possible starting position(s) of PSCCH and/or PSSCH may not overlap with PSCCH and/or PSSCH DMRS candidates (e.g., resource pool configuration-based, full candidate-based) for PSCCH/PSSCH of other symbol interval lengths.

For example, the mapping for a long TTI may be performed in the form of additionally mapping the coded modulation symbols remaining after performing the mapping for a short TTI. For example, in a domain where transmission may be canceled or punctured due to LBT failure, parity bits may be preferentially mapped, or a part close to the least significant bit (LSB) of coded bits may be preferentially mapped, or multiple code blocks may be evenly mapped.

For example, when calculating a transport block size (TBS), the UE may additionally multiply a scaling factor. For example, the scaling factor may be (pre-)configured per PSSCH starting symbol and/or per PSSCH symbol interval length. For example, the related information may be indicated in SCI. For example, indicating a PSFCH symbol overhead for TBS calculation may be extended (for this purpose).

Based on an embodiment of the present disclosure, for example, in an unlicensed band, the UE may be configured to perform SL SSB transmission for performing SL communication based on (part or all of) the following rules. Through this, for example, SL SSB can be transmitted while satisfying occupied channel bandwidth (OCB) requirements (e.g., the signal/channel should be transmitted occupying the bandwidth larger than 80% of a single RB set (16 MHz)) (and/or power spectral density (PSD) requirements (e.g., the maximum transmit power is 10 dBm per 1 MHz bandwidth)). For example, the following proposed rule may be applied only if the interlace-based (RB) structure is configured. For example, the following proposed rule may be applied regardless of whether the interlace-based (RB) structure is configured.

For example, gap information (GAP) between SL SSB-related RBs (e.g., 11) and (absolute frequency) position information of the lowest index (SL SSB) subcarrier (and/or RB) (and/or offset information relative to the starting position of a SL BWP) (START_POS) may be configured. For example, as another scheme, GAP information may be (implicitly) derived based on FLOOR (a value obtained by dividing the number of RBs related to (one) RB set by the number of RBs related to SL SSB) (and/or CEILING (a value obtained by dividing the number of RBs related to (one) RB set by the number of RBs related to SL SSB)). Herein, FLOOR (X) is a function that derives the largest integer value less than or equal to X, and CEILING (Y) is a function that derives the smallest integer value greater than or equal to Y.

In an embodiment of the present disclosure, GAP information (and/or START_POS information) may be configured differently (and/or independently) for at least one of the (SL communication-related) subcarrier spacing value (and/or CP type (e.g., normal CP, extended CP) and/or SL BWP size and/or frequency domain (e.g., FR1, FR2)).

For example, whether or not the above rule is applied (and/or the parameter value related to the proposed method of the present disclosure) may be configured/allowed specifically (or differently or independently) (and/or the application of the above rule may be configured/allowed limitedly) based on at least one of the following elements/parameters (or for each of the following elements/parameters) comprising: a service type (and/or a (LCH or service) priority) and/or a QoS requirement (e.g., latency, reliability, minimum communication range) and/or a PQI parameter) (and/or HARQ FEEDBACK ENABLED (and/or DISABLED) LCH/MAC PDU (transmission) and/or a CBR measurement value of a resource pool and/or a SL cast type (e.g., unicast, groupcast, broadcast) and/or a SL groupcast HARQ feedback option (e.g., NACK ONLY feedback, ACK/NACK feedback, TX-RX distance-based NACK ONLY feedback) and/or a SL mode 1 CG type (e.g., SL CG type 1/2) and/or a SL mode type (e.g., mode 1/2) and/or a resource pool and/or whether a PSFCH resource is configured for a resource pool and/or whether periodic resource reservation operation (and/or aperiodic resource reservation operation) is allowed/configured (or not allowed/configured) for a resource pool and/or whether partial sensing operation (and/or random resource selection operation (and/or full sensing operation)) is allowed/configured (or not allowed/configured) for a resource pool and/or a source (L2) ID (and/or a destination (L2) ID) and/or a PC5 RRC connection link and/or a SL link and/or a connection state (with a base station) (e.g., RRC CONNECTED state, RRC IDLE state, RRC INACTIVE state) and/or a SL HARQ process (ID) and/or whether SL DRX operation (of a TX UE or an RX UE) is performed and/or whether it is a power saving (TX or RX) UE and/or a case where (from the perspective of a particular UE) PSFCH TX and PSFCH RX (and/or multiple PSFCH TXs (exceeding a UE capability)) overlap (and/or PSFCH TX (and/or PSFCH RX) is skipped) and/or a case where an RX UE actually (successfully) receives a PSCCH (and/or PSSCH) (retransmission from a TX UE and/or a case where a (TX) UE performing packet transmission (and/or transmission resource (re)selection) performs power saving operation (and/or SL DRX operation) and/or a case where a target (RX) UE of packet transmission performs power saving operation (and/or SL DRX operation) and/or a case where the remaining PDB value related to packet transmission is greater than or equal to (or less than or equal to) a pre-configured threshold and/or a case of (TB-related) initial transmission (and/or retransmission) and/or a case where an interlace-based (RB) structure is applied and/or a case where a (pre-configured) channel access type (e.g., Type 1, Type 2A, Type 2B, Type 2C, semi-static channel occupancy) is performed and/or a case where a (pre-configured) SL channel/signal (e.g., SL SSB, PSCCH, PSSCH, PSFCH) is transmitted/received and/or an RB set (and/or channel and/or carrier) (on which channel access operation is performed in an unlicensed band) and/or a channel occupancy time (COT) and/or a TX burst and/or a discovery burst). In addition, combinations of the proposed methods (and/or proposed rules and/or embodiments) described in the present disclosure may be applied. Further, in the present disclosure, the term "configuration/being configured" (or "designation/being designated") may be extended to or interpreted as a form that the base station informs the UE through a pre-defined (physical layer or upper layer) channel/signal (e.g., SIB, RRC, MAC CE) (and/or a form provided through pre-configuration and/or a form that the UE informs another UE through a pre-defined (physical layer or upper layer) channel/signal (e.g., SL MAC CE, PC5 RRC)). In addition, the term "PSFCH" in the present disclosure may be extended to or interpreted as "(NR or LTE) PSSCH (and/or (NR or LTE) PSCCH) (and/or (NR or LTE) SL SSB (and/or UL channel/signal))" (or vice versa). In addition, the proposed methods of the present disclosure may be combined with each other and extended (in new forms). In addition, in the present disclosure, the term "ACTIVE TIME" (and/or "ON DURATION") may be extended to or interpreted as "ON DURATION" (and/or "ACTIVE TIME") (or vice versa).

In an embodiment of the present disclosure, a method for determining the contention window size may be a combination of a plurality of methods. For example, if there are multiple SL HARQ-ACK feedback groups referenced, the UE may increase a CW_p value for all or each CAPC to the next allowable value if the result of the determination based on the representative HARQ-ACK value for each group is not to keep the CW_p value for all or each CAPC and/or reset the CW_p value to an initial value. For example, if there are multiple factors referenced in setting the contention window size, and the result of determining each factor is to increase the CW_p value to the next allowable value and to keep or reset the CW_p value, the UE may keep the CW_p value and/or reset the CW_p value to the minimum value. For example, if there are multiple factors referenced in setting the contention window size, and the result of determining each factor is to increase the CW_p value to the next allowable value and to keep or reset the CW_p value, the UE may increase the CW_p value to the next allowable value.

In an embodiment of the present disclosure, a PSCCH/PSSCH referenced in determining the contention window size may be received within a specific time duration. For example, the specific time duration may be within the fastest SL channel occupancy duration since the UE last updated CW_p.

In an embodiment of the present disclosure, the operation of initializing to the minimum value may be replaced by another specific value (e.g., a (pre-configured) value), and/or said specific value may be configured differently depending on factors for adjusting the contention window size.

In an embodiment of the present disclosure, a reference duration may be a duration from the beginning of a channel occupancy for a COT obtained by the UE (for sidelink communication) and/or a COT obtained by the base station (for sidelink communication) to the end of the first slot in which actual specific sidelink transmission is performed for all allocated resources for sidelink transmission, or to the end of the first transmission burst including actual specific sidelink transmission for all allocated resources for sidelink transmission, or to an earlier of the above end times. For example, the specific sidelink transmission may be PSCCH/PSSCH transmission for unicast and/or groupcast and/or a PSCCH/PSSCH for which SL HARQ-ACK feedback is enabled. For example, the length of the reference duration may be (pre-)configured per a resource pool and/or per a SL priority value of SL transmission of the UE when the COT is initialized.

In an embodiment of the present disclosure, different combinations of the above may be used depending on whether the COT duration is initialized by the UE or by the base station.

In an embodiment of the present disclosure, adjusting the contention window size for sidelink may be performed per a unicast session (group) and/or per a cast type and/or per a transmission priority value and/or per a SL transmission with SL HARQ-ACK feedback enabled/disabled and/or per a SL HARQ-ACK feedback option, respectively. For example, the first UE may perform the procedure of adjusting the contention window size for SL transmission from the first UE to the second UE and for SL transmission from the first UE to the third UE, respectively. For example, when adjusting the contention window size based on HARQ-ACK, the HARQ-ACK may be limited to a specific cast type and/or a specific unicast session.

In an embodiment of the present disclosure, adjusting the contention window size for sidelink may be performed only based on a specific cast type (e.g., unicast or groupcast) and/or a PSSCH with SL HARQ-ACK feedback enabled.

In an embodiment of the present disclosure, initializing the CW_p value to the respective minimum value may be replaced by decreasing the CW_p value to the previous allowable value.

For example, in type 1 SL channel access, the size of the contention window may be (pre-)configured per a priority class and/or per a SL priority and/or per a resource pool. For example, in the above case, adjusting the contention window size may not be performed by the UE.

In an embodiment of the present disclosure, a threshold for determining whether a channel is busy or idle when performing channel sensing according to a channel access type may be pre-defined and/or (pre-)configured per a resource pool and/or per a SL BWP and/or per a RB set and/or per a carrier and/or per a SL transmission priority and/or per a representative transmit power value (range) and/or per a congestion control level.

Embodiments of the present disclosure may be applied in the form of any combination of the above, depending on transmission within or outside the channel occupancy time (COT). Embodiments of the present disclosure may be applied in the form of any combination of the above, depending on the form of the COT (e.g., whether it is semi-static or time-varying). For example, the semi-static COT may be configured when the absence of other technologies sharing the same channel or RB set is guaranteed for a certain time, such as by regulation. For example, in the case of SL transmission, the semi-static COT may be configured when the absence of DL and/or UL transmission sharing the same channel or RB set is guaranteed for a certain time, such as by regulation. For example, in the case of DL and/or UL transmission, the semi-static COT may be configured when the absence of SL transmission sharing the same channel or RB set for a certain period is guaranteed, such as by regulation. For example, the semi-static COT may be configured when the absence of SL mode 2 resource (re)selection based SL transmission sharing the same channel or RB set is guaranteed for a certain period, such as by regulation. For example, the length of the fixed-frame period (FFP) and/or the time domain offset value for the semi-static COT duration (pre-)configured per a resource pool and/or per a SL BWP and/or per a carrier and/or per an RB set and/or per a congestion control level and/or per a SL transmission priority value. For example, the length of the fixed-frame period (FFP) and/or the time domain offset value for the semi-static COT duration may be configured through inter-UE PC5-RRC signaling. For example, the (pre-)configured FFP may be overwritten through the PC5-RRC signaling. For example, the FFP configured by the PC5-RRC may be used only for unicast transmission corresponding to the PC5-RRC connection. Embodiments of the present disclosure may be applied in any combination of the above, depending on a carrier, with or without a guard between RB sets, or a regulation, differently.

While embodiments of the present disclosure describe changing the contention window size for all CAPCs, the ideas of the present disclosure can be extended to include changing the contention window size for each specific CAPC or SL priority value.

In an embodiment of the present disclosure, the channel access type and whether/method of instruction may be applied differently for each SL channel. In an embodiment of the present disclosure, the channel access type and whether/method of instruction may be applied differently depending on the type of information included in the SL channel.

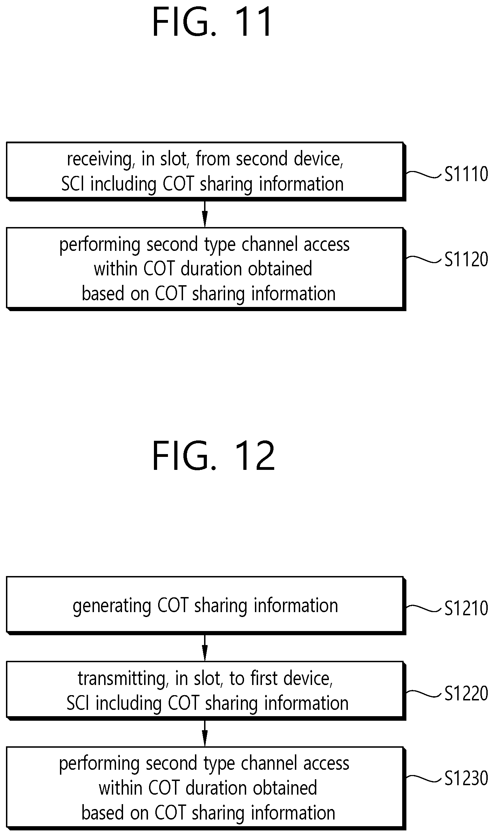

FIG. 11 shows a method for a first device to perform wireless communication, based on an embodiment of the present disclosure. The embodiment of FIG. 11 may be combined with various embodiments of the present disclosure.

Referring to FIG. 11, in step S1110, the first device may receive, in a slot, from a second device, sidelink control information (SCI) including channel occupancy time (COT) sharing information. In step S1120, the first device may perform a second type channel access within a COT duration obtained based on the COT sharing information. For example, a processing time required for decoding the COT sharing information may be defined for the first device. For example, the processing time may start from the slot in which the SCI including the COT sharing information is received.

For example, the COT duration may be used by the first device after the processing time from the slot in which the SCI including the COT sharing information is received.

For example, the processing time may be equal to a number of slots between a slot in which resource selection for sidelink transmission is triggered and a last slot of a sensing window.

For example, the SCI including the COT sharing information may be received from the second device through a physical sidelink shared channel (PSSCH). Additionally, for example, the first device may determine a physical sidelink feedback channel (PSFCH) resource for PSFCH transmission related to the PSSCH. For example, the second type channel access may be performed during a time interval before the PSFCH resource.

For example, the second type channel access may include at least one of a channel access during a 25 microsecond sensing interval, a channel access during a 16 microsecond sensing interval, or a channel access without sensing.

For example, a first type channel access based on random backoff may be performed outside the COT duration.

For example, the COT sharing information may include at least one of information related to a channel access type or information related to the COT duration. For example, the information related to the COT duration may include information related to a PSFCH transmission occasion. For example, the COT duration may be a time duration between a slot related to a PSSCH received from the second device and the PSFCH transmission occasion. For example, the information related to the COT duration may include at least one of information representing a number of slots or information representing a number of symbols. For example, the COT duration may be obtained based on at least one of the number of symbols or the number of slots from a slot related to a PSSCH received from the second device. For example, the information related to the COT duration may include at least one of information representing a slot index or information representing a symbol index.

For example, the COT duration may be configured based on COT duration information from the slot in which the SCI including the COT sharing information is received, and the first device may not be allowed to use the COT duration during the processing time from the slot in which the SCI is received.

The proposed method can be applied to devices based on various embodiments of the present disclosure. First, the processor 102 of the first device 100 may control the transceiver 106 to receive, in a slot, from a second device, sidelink control information (SCI) including channel occupancy time (COT) sharing information. In addition, the processor 102 of the first device 100 may perform a second type channel access within a COT duration obtained based on the COT sharing information. For example, a processing time required for decoding the COT sharing information may be defined for the first device. For example, the processing time may start from the slot in which the SCI including the COT sharing information is received.

Based on an embodiment of the present disclosure, a first device adapted to perform wireless communication may be provided. For example, the first device may comprise: at least one transceiver; at least one processor; and at least one memory connected to the at least one processor and storing instructions. For example, the instructions, based on being executed by the at least one processor, may cause the first device to perform operations comprising: receiving, in a slot, from a second device, sidelink control information (SCI) including channel occupancy time (COT) sharing information; and performing a second type channel access within a COT duration obtained based on the COT sharing information. For example, a processing time required for decoding the COT sharing information may be defined for the first device. For example, the processing time may start from the slot in which the SCI including the COT sharing information is received.

Based on an embodiment of the present disclosure, a processing device adapted to control a first device may be provided. For example, the processing device may comprise: at least one processor; and at least one memory connected to the at least one processor and storing instructions. For example, the instructions, based on being executed by the at least one processor, may cause the first device to perform operations comprising: receiving, in a slot, from a second device, sidelink control information (SCI) including channel occupancy time (COT) sharing information; and performing a second type channel access within a COT duration obtained based on the COT sharing information. For example, a processing time required for decoding the COT sharing information may be defined for the first device. For example, the processing time may start from the slot in which the SCI including the COT sharing information is received.

Based on an embodiment of the present disclosure, a non-transitory computer-readable storage medium storing instructions may be provided. For example, the instructions, when executed, may cause a first device to perform operations comprising: receiving, in a slot, from a second device, sidelink control information (SCI) including channel occupancy time (COT) sharing information; and performing a second type channel access within a COT duration obtained based on the COT sharing information. For example, a processing time required for decoding the COT sharing information may be defined for the first device. For example, the processing time may start from the slot in which the SCI including the COT sharing information is received.

FIG. 12 shows a method for a second device to perform wireless communication, based on an embodiment of the present disclosure. The embodiment of FIG. 12 may be combined with various embodiments of the present disclosure.

Referring to FIG. 12, in step S1210, the second device may generate channel occupancy time (COT) sharing information. In step S1220, the second device may transmit, in a slot, to a first device, sidelink control information (SCI) including the COT sharing information. In step S1230, the second device may perform a second type channel access within a COT duration obtained based on the COT sharing information. For example, a processing time required for decoding the COT sharing information may be defined for the first device or the second device. For example, the processing time may start from the slot in which the SCI including the COT sharing information is transmitted.

The proposed method can be applied to devices based on various embodiments of the present disclosure. First, the processor 202 of the second device 200 may generate channel occupancy time (COT) sharing information. In addition, the processor 202 of the second device 200 may control the transceiver 206 to transmit, in a slot, to a first device, sidelink control information (SCI) including the COT sharing information. In addition, the processor 202 of the second device 200 may perform a second type channel access within a COT duration obtained based on the COT sharing information. For example, a processing time required for decoding the COT sharing information may be defined for the first device or the second device. For example, the processing time may start from the slot in which the SCI including the COT sharing information is transmitted.

Based on an embodiment of the present disclosure, a second device adapted to perform wireless communication may be provided. For example, the second device may comprise: at least one transceiver; at least one processor; and at least one memory connected to the at least one processor and storing instructions. For example, the instructions, based on being executed by the at least one processor, may cause the second device to perform operations comprising: generating channel occupancy time (COT) sharing information; transmitting, in a slot, to a first device, sidelink control information (SCI) including the COT sharing information; and performing a second type channel access within a COT duration obtained based on the COT sharing information. For example, a processing time required for decoding the COT sharing information may be defined for the first device or the second device. For example, the processing time may start from the slot in which the SCI including the COT sharing information is transmitted.

Based on an embodiment of the present disclosure, a processing device adapted to control a second device may be provided. For example, the processing device may comprise: at least one processor; and at least one memory connected to the at least one processor and storing instructions. For example, the instructions, based on being executed by the at least one processor, may cause the second device to perform operations comprising: generating channel occupancy time (COT) sharing information; transmitting, in a slot, to a first device, sidelink control information (SCI) including the COT sharing information; and performing a second type channel access within a COT duration obtained based on the COT sharing information. For example, a processing time required for decoding the COT sharing information may be defined for the first device or the second device. For example, the processing time may start from the slot in which the SCI including the COT sharing information is transmitted.

Based on an embodiment of the present disclosure, a non-transitory computer-readable storage medium storing instructions may be provided. For example, the instructions, when executed, may cause a second device to perform operations comprising: generating channel occupancy time (COT) sharing information; transmitting, in a slot, to a first device, sidelink control information (SCI) including the COT sharing information; and performing a second type channel access within a COT duration obtained based on the COT sharing information. For example, a processing time required for decoding the COT sharing information may be defined for the first device or the second device. For example, the processing time may start from the slot in which the SCI including the COT sharing information is transmitted.

Based on various embodiments of the present disclosure, the COT initiating UE can know in advance processing time information required for the COT responding UE to decode shared COT information. In this case, since the processing time information required for the COT responding UE to decode the shared COT information is available for the COT initiating UE, the COT initiating UE can maintain/perform its own transmission during the corresponding processing time after transmitting the shared COT information. Through this, interruption by transmission of other SL-U UEs (or WI-FI UEs) within the shared COT duration can be prevented.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

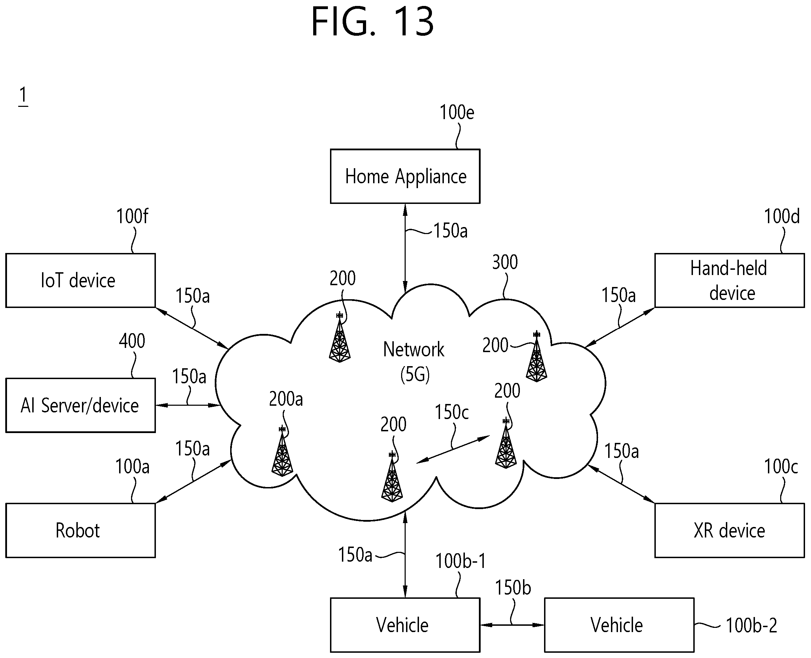

FIG. 13 shows a communication system 1, based on an embodiment of the present disclosure. The embodiment of FIG. 13 may be combined with various embodiments of the present disclosure.

Referring to FIG. 13, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to- Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

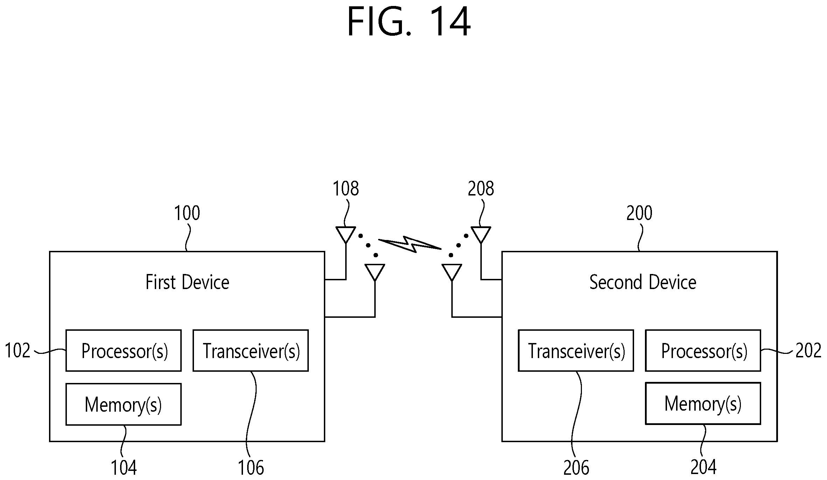

FIG. 14 shows wireless devices, based on an embodiment of the present disclosure. The embodiment of FIG. 14 may be combined with various embodiments of the present disclosure.

Referring to FIG. 14, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 13.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), RandomAccess Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

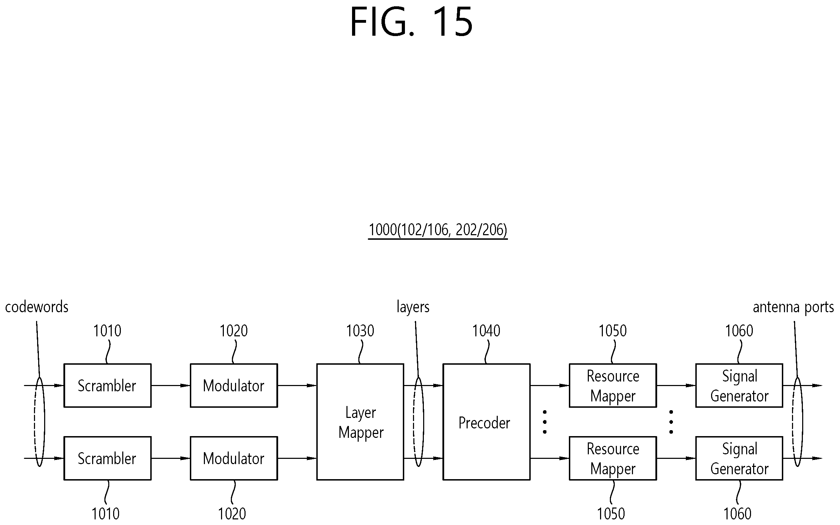

FIG. 15 shows a signal process circuit for a transmission signal, based on an embodiment of the present disclosure. The embodiment of FIG. 15 may be combined with various embodiments of the present disclosure.

Referring to FIG. 15, a signal processing circuit 1000 may include scramblers 1010, modulators 1020, a layer mapper 1030, a precoder 1040, resource mappers 1050, and signal generators 1060. An operation/function of FIG. 15 may be performed, without being limited to, the processors 102 and 202 and/or the transceivers 106 and 206 of FIG. 14. Hardware elements of FIG. 15 may be implemented by the processors 102 and 202 and/or the transceivers 106 and 206 of FIG. 14. For example, blocks 1010 to 1060 may be implemented by the processors 102 and 202 of FIG. 14. Alternatively, the blocks 1010 to 1050 may be implemented by the processors 102 and 202 of FIG. 14 and the block 1060 may be implemented by the transceivers 106 and 206 of FIG. 14.

Codewords may be converted into radio signals via the signal processing circuit 1000 of FIG. 15. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 15. For example, the wireless devices (e.g., 100 and 200 of FIG. 14) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

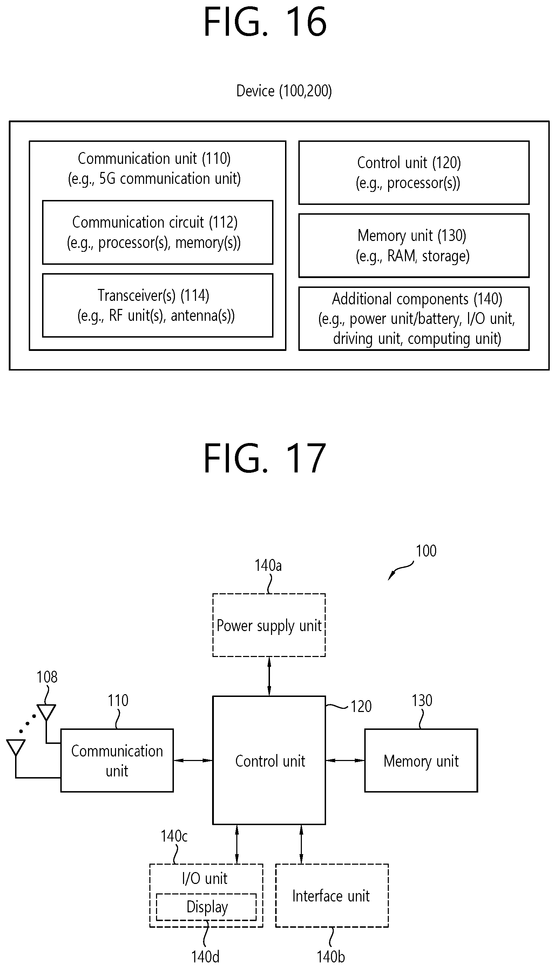

FIG. 16 shows another example of a wireless device, based on an embodiment of the present disclosure. The wireless device may be implemented in various forms according to a use-case/service (refer to FIG. 13). The embodiment of FIG. 16 may be combined with various embodiments of the present disclosure.

Referring to FIG. 16, wireless devices 100 and 200 may correspond to the wireless devices 100 and 200 of FIG. 14 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 14. For example, the transceiver(s) 114 may include the one or more transceivers 106 and 206 and/or the one or more antennas 108 and 208 of FIG. 14. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 13), the vehicles (100b-1 and 100b-2 of FIG. 13), the XR device (100c of FIG. 13), the hand-held device (100d of FIG. 13), the home appliance (100e of FIG. 13), the IoT device (100f of FIG. 13), a digital broadcast terminal, a hologram device, a public safety device, an MTC device, a medicine device, a fintech device (or a finance device), a security device, a climate/environment device, the AI server/device (400 of FIG. 13), the BSs (200 of FIG. 13), a network node, etc. The wireless device may be used in a mobile or fixed place according to a use-example/service.

In FIG. 16, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 16 will be described in detail with reference to the drawings.

FIG. 17 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 17 may be combined with various embodiments of the present disclosure.

Referring to FIG. 17, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 16, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

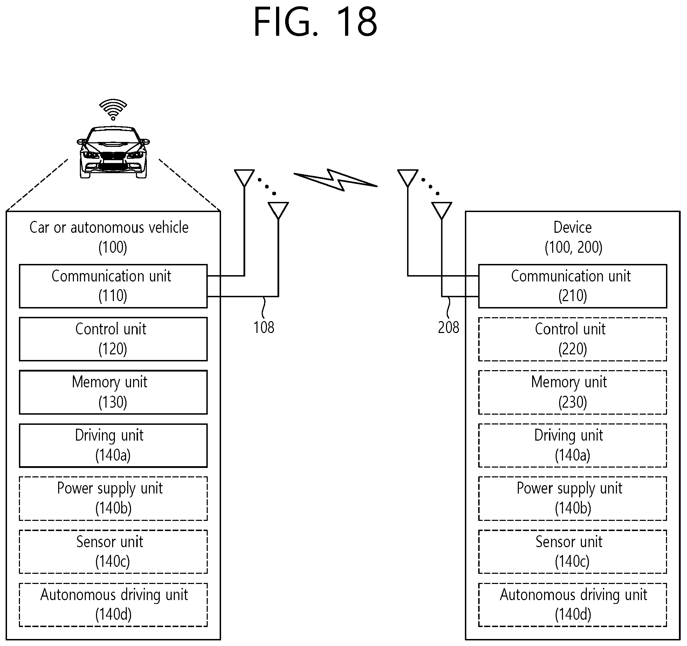

FIG. 18 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 18 may be combined with various embodiments of the present disclosure.

Referring to FIG. 18, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 16, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method for performing wireless communication by a first device, the method comprising:
receiving, in a slot, from a second device, sidelink control information (SCI) including channel occupancy time (COT) sharing information; and
performing a second type channel access within a COT duration obtained based on the COT sharing information,
wherein a processing time required for decoding the COT sharing information is defined for the first device, and
wherein the processing time starts from the slot in which the SCI including the COT sharing information is received.

2. The method of claim 1, wherein the COT duration is used by the first device after the processing time from the slot in which the SCI including the COT sharing information is received.

3. The method of claim 1, wherein the processing time is equal to a number of slots between a slot in which resource selection for sidelink transmission is triggered and a last slot of a sensing window.

4. The method of claim 1, wherein the SCI including the COT sharing information is received from the second device through a physical sidelink shared channel (PSSCH).

5. The method of claim 4, further comprising:
determining a physical sidelink feedback channel (PSFCH) resource for PSFCH transmission related to the PSSCH,
wherein the second type channel access is performed during a time interval before the PSFCH resource.

6. The method of claim 1, wherein the second type channel access includes at least one of a channel access during a 25 microsecond sensing interval, a channel access during a 16 microsecond sensing interval, or a channel access without sensing.

7. The method of claim 1, wherein a first type channel access based on random backoff is performed outside the COT duration.

8. The method of claim 1, wherein the COT sharing information includes at least one of information related to a channel access type or information related to the COT duration.

9. The method of claim 8, wherein the information related to the COT duration includes information related to a PSFCH transmission occasion.

10. The method of claim 9, wherein the COT duration is a time duration between a slot related to a PSSCH received from the second device and the PSFCH transmission occasion.

11. The method of claim 8, wherein the information related to the COT duration includes at least one of information representing a number of slots or information representing a number of symbols.

12. The method of claim 11, wherein the COT duration is obtained based on at least one of the number of symbols or the number of slots from a slot related to a PSSCH received from the second device.

13. The method of claim 1, wherein the COT duration is configured based on COT duration information from the slot in which the SCI including the COT sharing information is received, and
wherein the first device is not allowed to use the COT duration during the processing time from the slot in which the SCI is received.

14. A first device adapted to perform wireless communication, the first device comprising:
at least one transceiver;
at least one processor; and
at least one memory connected to the at least one processor and storing instructions that, based on being executed by the at least one processor, cause the first device to perform operations comprising:
receiving, in a slot, from a second device, sidelink control information (SCI) including channel occupancy time (COT) sharing information; and
performing a second type channel access within a COT duration obtained based on the COT sharing information,
wherein a processing time required for decoding the COT sharing information is defined for the first device, and
wherein the processing time starts from the slot in which the SCI including the COT sharing information is received.

15. A processing device adapted to control a first device, the processing device comprising:
at least one processor; and
at least one memory connected to the at least one processor and storing instructions that, based on being executed by the at least one processor, cause the first device to perform operations comprising:
receiving, in a slot, from a second device, sidelink control information (SCI) including channel occupancy time (COT) sharing information; and
performing a second type channel access within a COT duration obtained based on the COT sharing information,
wherein a processing time required for decoding the COT sharing information is defined for the first device, and
wherein the processing time starts from the slot in which the SCI including the COT sharing information is received.

16. A non-transitory computer-readable storage medium storing instructions that, when executed, cause a first device to perform operations comprising:
receiving, in a slot, from a second device, sidelink control information (SCI) including channel occupancy time (COT) sharing information; and
performing a second type channel access within a COT duration obtained based on the COT sharing information,
wherein a processing time required for decoding the COT sharing information is defined for the first device, and
wherein the processing time starts from the slot in which the SCI including the COT sharing information is received.

17. A method for performing wireless communication by a second device, the method comprising:
generating channel occupancy time (COT) sharing information;
transmitting, in a slot, to a first device, sidelink control information (SCI) including the COT sharing information; and
performing a second type channel access within a COT duration obtained based on the COT sharing information,
wherein a processing time required for decoding the COT sharing information is defined for the first device or the second device, and
wherein the processing time starts from the slot in which the SCI including the COT sharing information is transmitted.

18. A second device adapted to perform wireless communication, the second device comprising:
at least one transceiver;
at least one processor; and
at least one memory connected to the at least one processor and storing instructions that, based on being executed by the at least one processor, cause the second device to perform operations comprising:
generating channel occupancy time (COT) sharing information;
transmitting, in a slot, to a first device, sidelink control information (SCI) including the COT sharing information; and
performing a second type channel access within a COT duration obtained based on the COT sharing information,
wherein a processing time required for decoding the COT sharing information is defined for the first device or the second device, and
wherein the processing time starts from the slot in which the SCI including the COT sharing information is transmitted.

19. A processing device adapted to control a second device, the processing device comprising:
at least one processor; and
at least one memory connected to the at least one processor and storing instructions that, based on being executed by the at least one processor, cause the second device to perform operations comprising:
generating channel occupancy time (COT) sharing information;
transmitting, in a slot, to a first device, sidelink control information (SCI) including the COT sharing information; and
performing a second type channel access within a COT duration obtained based on the COT sharing information,
wherein a processing time required for decoding the COT sharing information is defined for the first device or the second device, and
wherein the processing time starts from the slot in which the SCI including the COT sharing information is transmitted.

20. A non-transitory computer-readable storage medium storing instructions that, when executed, cause a second device to perform operations comprising:
generating channel occupancy time (COT) sharing information;
transmitting, in a slot, to a first device, sidelink control information (SCI) including the COT sharing information; and
performing a second type channel access within a COT duration obtained based on the COT sharing information,
wherein a processing time required for decoding the COT sharing information is defined for the first device or the second device, and
wherein the processing time starts from the slot in which the SCI including the COT sharing information is transmitted.
